# EUROPEAN PATENT SPECIFICATION

(11) **EP 3 992 156 B1**
(45) Date of publication and mention of the grant of the patent: **27.12.2023**
(21) Application number: 21204886.2
(22) Date of filing: 26.10.2021
(51) Int. Cl.: C02F 1/48, F16L 41/03, F16L 55/24, F24D 19/00, C02F 103/02, F16K 11/087

(54) **VALVE FOR PLUMBING SYSTEMS, METHOD OF FLUID TREATMENT USING SAID VALVE AND METHOD OF FLUSHING SAID VALVE**
VENTIL FÜR LEISTUNGSSYSTEME, VERFAHREN ZUR FLUIDBEHANDLUNG UNTER VERWENDUNG DES BESAGTEN VENTILS UND VERFAHREN ZUM SPÜLEN DES BESAGTEN VENTILS
SOUPAPE POUR SYSTÈMES DE PLOMBERIE, PROCÉDÉ DE TRAITEMENT DE FLUIDE UTILISANT LADITE SOUPAPE ET PROCÉDÉ DE RINÇAGE DE LADITE SOUPAPE

(30) Priority: 30.10.2020 IT 202000025954
(43) Date of publication of application: 04.05.2022
(73) Proprietor: Cimberio Holding S.p.A., 20121 Milano (MI) (IT)
(72) Inventor: CIMBERIO, Roberto, 28010 AMENO FRAZ. VACCIAGO (NO) (IT); CHIARELLO, Andrea, 28010 ALZO DI PELLA (NO) (IT)
(74) Representative: PGA S.p.A.

(56) References cited:
- EP-A1- 2 808 070
- EP-A1- 3 150 266
- EP-A1- 3 640 509
- EP-B1- 2 808 070
- WO-A1-2018/138061
- US-A- 3 809 247
- US-A1- 2001 011 557

## Description

### FIELD OF THE INVENTION

The present invention is directed to a valve for plumbing systems.

The present invention is further directed to a method of separating solid particles from a fluid using the inventive valve and a method of flushing the valve. The present invention may find application in plumbing or heating systems, for example in domestic or industrial air conditioning or heating systems.

### STATE OF THE ART

Heating and air conditioning systems are equipped with operating devices - such as boilers, pumps, heat exchangers - configured to treat the working fluid circulating in the system; typically, upstream and/or downstream of these operating devices, there are valves capable of interrupting or reducing flow the fluid, and in some cases also perform a treatment on the same fluid, for example a cleaning or filtering treatment.

In fact, fluid circulating in such plants often carries a quantity of solid particles, for example metal particles formed by internal corrosion of piping or coming from other plant equipment, which tend to accumulate inside the plant's operating devices with consequent alteration of their operation: the accumulation of these particles can uncontrollably alter the plant's design parameters, reducing overall efficiency or even causing failures. In order to avoid this inconvenience, valves have been developed that are able to retain at least a part of the metal particles present in the fluid passing through the valve.

A first example, described in PCT Application No. WO2013/175195 A1, shows a magnetic separator comprising a container provided with an inlet and an outlet of a fluid, within which is engaged an elongated magnetic body disposed coaxially to the container and configured to retain ferrous solid particles suspended in the fluid passing through the separator. The separator further includes a divider disposed within the container, configured to slow down flow of fluid within the same container and increase exposure time of the fluid to the attractive action of the magnetic body.

Although such separator is able to retain at least part of the particles present in the fluid, the Applicant has found that the solution described in application No. WO 2013/175195 A1 does not allow to perform a correct and easy cleaning of the separator from the solid particles collected. In fact, to clean the separator it is necessary to block the plant in order to be able to open the container and allow subsequent extraction of the magnetic body, which can be washed only outside the container. In other words, the separator cannot be cleaned unless it is completely removed from the plant. It is evident that the structure of the separator described in claim No. WO 2013/175195 A1 therefore makes complex maintenance work on the separator.

A second example, described in PCT Patent Application No. WO 2018/138061 A1, also shows a magnetic separator installed on a heating system. The separator includes an inlet connected to the water supply system by means of an inlet conduit and an outlet connected to a boiler by means of a feed conduit. In particular, the separator includes a container having an elongated cylindrical shape; the inlet and outlet are defined on the side wall of the container and are spaced along a longitudinal development axis of the container: in detail, the inlet is placed at a first axial end portion, while the outlet is arranged at a second axial end portion opposed to the first axial end portion. Inside the container, an elongated magnetic body is coaxially engaged, configured to retain ferrous solid particles suspended in the fluid crossing the separator. A first fluid shut-off valve is provided on the inlet conduit, which further communicates with an exhaust conduit; a second fluid shut-off valve is instead provided on the supply conduit. The first shut-off valve is movable between two operating positions; in a first position the first valve is configured to allow fluid to enter the container, while in a second position the first valve occludes the inlet conduit and allows fluid communication only between the container and the discharge conduit. Occluding the inlet conduit, it is therefore possible to allow the fluid contained in the boiler to flow through the outlet conduit and consequently flush of the container itself. Although the solution described in patent application PCT No. WO 2018/138061 A1 allows washing of the separator installed on the plant, the Applicant has found that such solution is not without drawbacks and therefore can be improved under certain aspects. In particular, the Applicant has found that the structure of the separator makes installation of the same on the system extremely complex, requiring a complex circuit of ducts negatively affecting the overall dimensions and exposing the system more to leaks and malfunctions.

A third example, described in GB 2491361 B shows a valve for heating systems comprising a valve body having only an inlet channel and an outlet channel. The valve further comprises a container engaged to the valve body receiving an elongated magnetic body configured to retain solid ferrous particles suspended in the fluid passing through the container; the container has a single access directly communicating with the first and second channels. A drain channel is also present on the container. Although also the valve described in GB 2491361 B allows retaining at least part of the metal particles present in the fluid, the Applicant has found that, even such valve, is not free of drawbacks and therefore can be improved under certain aspects. In fact, the structure of this valve does not allow proper drainage of fluid and correct and complete cleaning of the container from the solid particles. A valve similar to that of GB 2491361 B is described in PCT Patent Application No. WO 2018/073738 A1.

A fourth example, described in Italian patent application No. 102016000025513, concerns a valve for heating systems comprising a valve body provided with an inlet conduit, an outlet conduit and an exhaust conduit. The valve further comprises a container engaged solely at the outlet conduit of the valve body: the container houses a magnetic body configured to retain ferrous solid particles suspended in the fluid passing through the container. At an intersection zone of the valve conduits, a fluid intercepting element is operable between two operating positions: in a first operating position the intercepting element allows fluid communication between the inlet conduit, the outlet conduit and the container, while in a second operating position the intercepting element obstructs the outlet conduit and allows fluid communication only between the inlet conduit and the outlet conduit.

Although the valve described in patent application No. 102016000025513 allows to retain at least part of the metal particles present in the fluid, the Applicant has found that, even such valve, is not free of drawbacks and therefore can be improved under certain aspects. In fact, the structure of the valve does not allow a proper drainage and a correct and complete cleaning of the container from solid particles deposited in the same container.

US2001011557A1 concerns a valve system for use in conjunction with a swimming pool filtration system and capable of operating in a normal condition, in which inlet port receives water to be filtered from pool and is connected to an outlet port in turn is connected with the filtration system. The filtration plant is connected downstream to the further inlet connected with the further outlet which returns filtered water to the pool.

EP2808070A1 concerns a backwashable heating filter with a housing with an inlet and outlet connected to a heating circuit and with a shut-off outlet; a sleeve is arranged movably in the longitudinal direction in the housing, the diameter of which is selected such that a gap communicating with the inlet is formed between the sleeve and the housing, and filter material located in the sleeve for removing particles from the waterstream flowing through the heating circuit and the heating filter; the filter material is formed from a granulate, from beads or other fluidizable material, the density of which is less than the density of water, so that the material floats on the surface of the water, and in a backwash position, the connection from the fresh water supply to the heating circuit is interrupted.

EP3150266A1 discloses a particle fluid separator with a containing body housing a magnetic element, a fluid inlet, a fluid outlet, a diverter interposed between the inlet and outlet.

US3809247A concerns a valve system intended for use in conjunction with a swimming pool filtration system. The valve system operates above a tank housing filter material such as sand. The valve system can operate in a normal condition where the inlet channel carries water. The water then passes through filter material and is then returns back once filtered.

### OBJECT OF THE INVENTION

It is therefore an object of the present invention to solve at least one of the drawbacks and/or limitations of the above solutions.

A first object is to provide a valve having a simple and compact structure, which is at the same time easily installable on domestic and/or industrial plumbing systems.

It is a further object to provide a valve capable of performing an effective removal of solid particles from a fluid without causing excessive pressure drop.

It is further an object to provide a valve capable of performing automatic flushing when installed on a plumbing system and capable of ensuring an adequate discharge of any solid particles from the valve during flushing.

It is a further object to provide a valve having a high degree of reliability and requiring a reduced number of maintenance operations.

### SUMMARY

One or more of the above objects are substantially achieved by a valve according to any one of claims 1-12, a method of treating fluids according to claim 13, a method of flushing according to claim 14, and a plumbing system according to claim 15.

### SUMMARY

According to an aspect of the present invention, a valve (1) for plumbing systems (100) is provided comprising:
- a valve body (2) having at least one inlet (4), at least one outlet (6), at least one first and one second access (8, 10) and at least one drain (30) each of which is configured to allow passage of fluid, said valve body (2) comprising:
   ∘ at least one first channel (3) extending between the inlet (4) and the first access (8), said first channel (3) having at its interior at least one seat (3b) interposed between the inlet (4) and the first access (8), wherein the drain (30) is in fluid communication with said first channel (3) and arranged at least partially facing said seat (3b),
   ∘ at least a second channel (5), distinct from the first channel (3), extending between the outlet (6) and the second access (10),
- at least one container (20), defining a compartment (21), engaged with the valve body (2) at said first and second accesses (8, 10),
- at least one shutter (40) housed in the seat (3b) and configured for intercepting fluid flowing from said first channel (3), wherein the shutter (40) is movable at least between:
   ∘ a first operating position, in which the shutter (40) allows fluid communication between the inlet (4) and the first access (8) in order to allow introduction of a fluid coming from the inlet (4) into the compartment (21) of the container (20) through said first access (8), wherein the shutter (40), in the first operating position, prevents passage of fluid through the drain (30),
   ∘ a second operating position, in which the shutter (40) allows fluid communication between the first access (8) and the drain (30) wherein the shutter (40), in the second operating position, prevents fluid communication between the inlet (4) and the first access (8), and at least one magnetic device (14) at least partly arranged in the compartment (21) of the container (20) and configured for attracting thereto ferrous or ferromagnetic particles present in the fluid passing from the compartment.

According to the present invention, the shutter (40), in the second operating position, is configured to allow fluid communication between the first access (8) and the drain (30) to allow discharge of said fluid from the first channel (3) through the drain (30).

In an aspect of the present invention at least part of the first channel (3) is in one piece with at least part of the second channel (5).

In an aspect of the present invention the entire second channel (5) is in one piece with at least part of the first channel (3).

In an aspect according to any one of the preceding aspects the drain (30) is in one piece with the second channel (5).

In an aspect according to any one of the preceding aspects the drain (30) is in one piece with at least part of the first channel (3).

In an aspect according to any one of the preceding aspects the first and second channels (3, 5) are, at least for a respective portion, adjacent to each other.

In an aspect according to any one of the preceding aspects the first and second channels (3, 5) extend parallel to each other, at least for a respective portion where they are adjacent to each other.

In an aspect according to any one of the preceding aspects the first channel (3) has a terminal portion extending substantially from the first access (8) to a midline portion of said first channel (3), wherein the second channel (5) has a terminal portion extending substantially from the second access (10) to a midline portion of said second channel (5), wherein the terminal portions of the first and second channels (3, 5) are adjacent to each other.

In an aspect according to any one of the preceding aspects, the terminal portions of the first and second channels (3, 5) are substantially parallel to each other.

In an aspect according to any one of the preceding aspects the terminal portions of the first and second channels (3, 5) are separated from each other solely by a partition wall (91).

In an aspect according to the preceding aspect, the partition wall (91) delimits at least part of the terminal portion of the first channel (3) and at least part of the terminal portion of the second channel. In an aspect according to any one of the preceding aspects the terminal portions of the first and second channels (3, 5) are in one piece.

In an aspect according to any one of the preceding aspects the valve body (2) comprises:
- a first half-part on which the first access (8), the second access (10), the outlet (6) and the drain (30) are defined, and
- a second half-part on which the inlet (4) is defined.

In an aspect according to the preceding aspect on the second half-part, only the inlet (4) is defined. In an aspect according to any one of the preceding two aspects the valve body (2) is solely formed of the first and second half-parts.

In an aspect according to any one of the preceding three aspects the first and second half-parts are removably engaged with each other.

In an aspect according to any one of the preceding four aspects the first and second half-parts are engaged by means of a threaded coupling.

In an aspect according to any one of the preceding five aspects on the first half-part said entire second channel (5) and at least one section of the first channel (3) is defined.

In an aspect according to any one of the preceding six aspects said section of the first channel (3) defined on the first half-part defines the first access (8), the seat (3b) and the drain (30).

In an aspect according to any one of the preceding seven aspects the first half-part is in one piece. In an aspect according to any one of the preceding eight aspects, the first half-part is made by a process selected from the group of: a die-casting process, a molding process, a machining process. In an aspect according to any one of the preceding nine aspects the first half-part is made of metallic material.

In an aspect according to any one of the preceding ten aspects, the second half-part is in a single piece.

In an aspect according to any one of the preceding eleven aspects, the second half-part is made by a process selected from the group of: a die-casting process, a molding process, a machining process. In an aspect according to any one of the preceding twelve aspects, the second half-part is made of metallic material.

In an aspect according to any one of the preceding thirteen aspects the first and second half-parts are made using the same material.

In an aspect according to any of the preceding aspects the shutter (40), in the first operative position, entirely occludes the drain (30).

According to the present invention, the shutter (40), in the first operating position, is configured to prevent the passage of fluid through the drain (30) and to allow fluid communication only between the inlet (4) and the first access (8).

According to the present invention, the shutter (40), in the second operating position, prevents fluid communication between the inlet (4) and the first access (8).

In an aspect according to any one of the preceding aspects the shutter (40), in the second operating position, is configured to allow fluid communication only between the first access (8) and the drain (30).

In an aspect according to any one of the preceding aspects the container (20) has at least one respective access (22) placed in fluid communication with the first and second accesses (8, 10) of the valve body (2).

In an aspect according to any of the preceding aspects the container access (22) is directly in fluid communication with the first and second accesses (8, 10).

In an aspect according to any one of the preceding aspects the access (22) of the container (20) is configured to allow fluid to flow into and/or out of the compartment (21).

In an aspect according to any one of the preceding aspects the access (22) is configured to place in direct fluid communication the first and second accesses (8, 10) with the compartment (21) of the container.

In an aspect according to any one of the preceding aspects the first and second accesses (8, 10) are both facing the at least one access (22) of the container (20).

In an aspect according to any one of the preceding aspects, the container (20) comprises only one access (22).

In an aspect according to any of the preceding aspects, the compartment (21) of the container communicates with a further environment (for example with the first and second accesses 8, 10 of the valve body) solely by means of said access (22) of the container.

In an aspect according to any one of the preceding aspects the access (22) of the container (20) has a fluid passage section greater than a fluid passage section defined by the first access (8).

In an aspect according to any one of the preceding aspects the access (22) of the container (20) has a fluid passage section greater than a fluid passage section defined by the second access (10).

In an aspect according to any one of the preceding aspects the access (22) of the container (20) has a fluid passage section greater than a fluid passage section defined by the sum of the fluid passage sections of the first and second accesses (8, 10).

In an aspect according to any one of the preceding aspects the access (22) has a fluid passage section which, in a view taken along a direction of fluid input or output from the compartment (21) of the container, entirely contains the first and second accesses (8, 10).

In an aspect according to any one of the preceding aspects, the container (20) and the valve body (2) are distinct from each other and removably engaged.

In an aspect according to any of the preceding aspects, the container (20) and the valve body (2) are engaged by means of a threaded coupling.

In an aspect according to any one of the preceding aspects, the shutter (40) comprises a first through opening (41), a second through opening (42) and a third through opening (43).

In an aspect according to the preceding aspect said first, second and third through-openings (41, 42, 43) are in fluid communication with each other by means of a central cavity (47) of the shutter (40). In an aspect according to any of the preceding two aspects the first and second through-openings (41, 42) face each other.

In an aspect according to any one of the preceding three aspects the third through opening (43) is angularly offset with respect to said first and second through openings (41, 42).

In an aspect according to any of the preceding four aspects the third through opening (43) faces a closure wall (48) of the shutter (40).

In an aspect according to any one of the preceding five aspects in the first operative position of the shutter (40), the first through opening (41) faces the inlet (4) while the second through opening (42) directly faces the first access (8), wherein, in the first operative position of the shutter (40), the closure wall (48) is configured for preventing fluid communication between the drain (30) and the first channel (3) of the valve body (2).

In an aspect according to the preceding aspect, in the second operative position of the shutter (40), the third through opening (43) directly faces the first access (8) while the second through opening (42) directly faces the drain (30), wherein, in the second operative position of the shutter (40), the closure wall (48) is configured for preventing fluid communication between the inlet (4) and the drain (30) and for preventing fluid communication between said inlet (4) and the compartment (21) of the container. In an aspect according to any one of the preceding seven aspects the first and second through-openings (41, 42) are aligned along a first direction while the third through-openings (43) and the closing wall (48) are aligned along a second direction, wherein the first and second directions are substantially orthogonal to each other.

In an aspect according to any one of the preceding eight aspects the first and second directions define an ideal plane, wherein the shutter (40) is movable by rotation between the first and second operative positions, and vice versa, about an axis orthogonal to said ideal plane.

In an aspect according to any one of the preceding nine aspects, the shutter (40) is movable by rotation between the first and second operative positions by an angle of between 70 and 110°, optionally by an angle of substantially 90°.

In an aspect according to any one of the preceding ten aspects the first through opening (41) has a circular outline.

In an aspect according to any one of the preceding eleven aspects the second through opening (42) has a circular outline.

In an aspect according to any one of the preceding twelve aspects the first and the second through-openings (41,42) define respective fluid passage sections that are substantially identical to each other. In an aspect according to any one of the preceding thirteen aspects, the third through opening (43) has a circular outline.

In an aspect according to any one of the fourteen preceding aspects, the third through opening (43) defines a fluid passage section that is smaller than a fluid passage section of the first through opening (41).

In an aspect according to any of the preceding aspects fifteen the third through opening (43) defines a fluid passage section smaller than a fluid passage section of the second through opening (41).

In an aspect according to any one of the preceding aspects the valve body (2) comprises a central body from which emerge at least one hollow inlet collar (3a) and at least one hollow outlet collar (5a). In an aspect according to the preceding aspect the inlet (4) of the valve body (2) is defined on a terminal portion of the inlet collar (3a).

In an aspect according to any one of the preceding two aspects the inlet collar (3a) defines at least a terminal portion of the first channel (3).

In an aspect according to any one of the preceding three aspects the outlet (6) of the valve body (2) is defined on a terminal portion of the outlet collar (5a).

In an aspect according to any one of the preceding aspects four the outlet collar defines at least a terminal portion of the second channel (5).

In an aspect according to any one of the preceding five aspects, the inlet collar (3a) is removably engaged to the central body.

In an aspect according to any one of the preceding six aspects the inlet collar (3a) is engaged to the central body by means of a threaded coupling.

In an aspect according to any one of the preceding seven aspects the outlet collar (5a) is in one piece with the central body.

In an aspect according to any one of the preceding eight aspects the inlet collar (3a) and the outlet collar (5a) extend along respective rectilinear development directions.

In an aspect according to any one of the preceding nine aspects the inlet collar (3a) and the outlet collar (5a) extend along respective directions orthogonal to each other.

In an aspect according to any one of the preceding aspects the valve body (2) comprises a hollow drainage collar (30a) joined in one piece to the central body.

In an aspect according to the preceding aspect on a terminal portion of the drainage collar (30a) the drain (30) is defined.

In an aspect according to any one of the preceding two aspects, the drainage collar (30a) is opposite to the outlet collar (5a) with respect to the central body.

In an aspect according to any one of the preceding three aspects the drainage collar (30a) extends substantially parallel to the exit collar (5a).

In an aspect according to any one of the preceding four aspects, the valve body (2) comprises at least one intermediate hollow collar (80) joined in one piece to the central body.

In an aspect according to the preceding aspect, the intermediate collar (80) emerges from the central body on the side opposite to the inlet collar (3a) with respect to the central body.

In an aspect according to any one of the preceding two aspects the first and second accesses (8, 10) are defined within the intermediate collar (80).

In an aspect according to any one of the preceding three aspects the container (20) is directly and removably engaged to the intermediate collar (80).

In an aspect according to any one of the preceding four aspects, the intermediate collar (80) extends substantially parallel to the inlet collar (3a).

In an aspect according to any one of the preceding five aspects the intermediate collar (80) is directly engaged to the container (20) at the access (22) thereof.

In an aspect according to any one of the preceding six aspects, the intermediate collar (80) is configured to allow fluid communication between the first and second accesses (8, 10) of the valve body (2) and the access (22) of the container (20).

In an aspect according to any one of the preceding aspects a first and a second conduit are formed inside and in one piece with the central body of the valve body.

In an aspect according to the preceding aspect, the first conduit and the inlet collar (3a) cooperatively define the first channel (3).

In an aspect according to any one of the preceding two aspects, the seat (3b) configured to receive and support the shutter (40) is defined partly on the first conduit and partly on the inlet collar (3a).

In an aspect according to any one of the preceding three aspects the second conduit and the outlet collar (5a) define, in cooperation with each other, the second channel (5).

In an aspect according to any one of the preceding aspects, the access (22) of the container (20) is configured to accommodate and engage the intermediate collar (80).

In an aspect according to any one of the preceding aspects, the valve body (2) comprises a by-pass through opening (90) that places the first channel (3) in direct fluid communication with the second channel (5).

In an aspect according to the preceding aspect, the valve body (2) has a partition wall (91) bounding, on one side, at least part of the first channel (3), and on the opposite side, at least part of the second channel (5), wherein said bypass opening (90) is defined on said partition wall.

In an aspect according to any one of the preceding two aspects, the partition wall (91) is facing the outlet (6).

In an aspect according to any one of the preceding three aspects the partition wall (91) is further facing the drain (30).

In an aspect according to any one of the preceding four aspects the third opening (43) of the shutter (40), in the first operating position of the shutter (40), is directly facing the partition wall (91).

In an aspect according to any one of the preceding five aspects the shutter (40), in the first operative position, is configured to allow fluid to pass through the third opening (43) and consequently through the bypass opening (90) to allow fluid entering from the inlet (4) to reach said second channel (5).

In an aspect according to any one of the preceding six aspects, the bypass opening (90) is configured to allow the shutter central cavity (47) to communicate directly with the second channel (5).

In an aspect according to any one of the preceding seven aspects the shutter (40), in the first operative position, is configured to allow fluid to pass through the third opening (43) and consequently through the bypass opening (90) to allow a portion of fluid entering from the inlet (4) to reach said second channel (5) without passing through the compartment (21) of the container (20).

In an aspect according to any one of the preceding eight aspects, the bypass opening (90), in the second operating position of the shutter (40), is configured to allow fluid to pass through so that at least a portion of the fluid arriving from the outlet (6) can directly pass through the first and second openings (41, 42) of the shutter and reach the drain (30) without passing through the compartment (21) of the container (20).

In an aspect according to any one of the preceding nine aspects the bypass opening (91) has a fluid passage section smaller than a fluid passage section of the inlet (4).

In an aspect according to any one of the preceding ten aspects the bypass opening (91) has a fluid passage section smaller than a fluid passage section of the outlet (6).

In an aspect according to any one of the preceding eleven aspects the bypass opening (91) has a fluid passage section smaller than a fluid passage section of the first access (8).

In an aspect according to any of the preceding twelve aspects the bypass opening (91) has a fluid passage section smaller than a fluid passage section of the second access (10).

In an aspect according to any one of the preceding aspects, the inlet collar (3a) comprises an engagement portion (3c) configured to allow connection of the valve body (2) to a delivery line (101) of a plumbing system (100), and in particular to a boiler inlet.

In an aspect according to the preceding aspect, the engagement portion (3c) of the inlet collar (3a) comprises an external thread.

In an aspect according to any one of the preceding aspects, the outlet collar (5a) comprises an engagement portion (5c) configured to allow connection of the valve body to a supply line (102) of a plumbing system (100).

In an aspect according to the preceding aspect, the engagement portion (5c) of the outlet collar (5a) comprises an external thread.

In an aspect according to any one of the preceding aspects, the drainage collar (30a) comprises an engagement portion (30c) configured to allow connection of the valve body to a drainage line (104) of a plumbing system (100).

In an aspect according to the preceding aspect, the engagement portion (30c) of the drainage collar (30a) comprises an external thread.

In an aspect according to any one of the preceding aspects, the intermediate collar (80) comprises an engagement portion (80c) configured to connect to a respective engagement portion (20c) of the container (20).

In an aspect according to the preceding aspect, the engagement portion (80c) of the intermediate collar (80) comprises an external thread while the engagement portion (20c) of the container comprises an internal thread.

In an aspect according to any one of the preceding aspects, the valve (1) comprises at least one operating element (60) constrained to the shutter (40) and configured to move the latter from the first to the second operating position, and vice versa.

In an aspect according to any one of the preceding aspects, the operating element (60) comprises:
- an engagement portion (61) hinged within an engagement seat (2a) of the valve body (2), said engagement portion (61) of the operating element (60) being configured to stably connect to a engagement portion (44) of the shutter (40) such that the latter and said engagement portion (61) are rotate together,
- at least one gripping portion (62) constrained to the engagement portion (61) outside the valve body (2), on the side opposite to the shutter (40), said gripping portion being graspable by a user to allow the movement of the plug from the first to the second operating position, and vice versa.

In an aspect according to any one of the preceding aspects said container (20) extends along a longitudinal axis (X) between a head portion and a bottom portion (20a, 20b).

In an aspect according to the preceding aspect said container (20) is engaged to the valve body at the head portion (20a).

In an aspect according to any one of the preceding two aspects said access (22) of the container, in a view along the longitudinal axis (X), has a fluid passage section entirely containing the first and second accesses (8, 10).

In an aspect according to any one of the preceding three aspects, the container (20) at the head portion (20a) comprises the engagement portion (20c) configured to engage the respective engagement portion (80c) of the intermediate collar (80) of the valve body (2).

In an aspect according to any one of the preceding four aspects, the access (22) of the container (20) is defined at the head portion (20a).

In one aspect according to any one of the preceding five aspects, the container (20) presents, in cross-section according to a plane orthogonal to the longitudinal axis (X), a hollow circular shape.

In an aspect according to any one of the preceding aspects, the container (20) is made by molding or casting.

In an aspect according to any one of the preceding aspects, the container is made of a plastic material. In an aspect according to any one of the preceding aspects, the container is made of at least one of the following materials: ABS, PPS, PSU, PE, PTFE, PVC, PET.

In an aspect according to any of the preceding aspects, the valve comprises at least one septum (50) disposed at least partially in the compartment (21) of the container (20) and configured to divide said compartment (21) into a first and a second half-chambers in fluid communication with each other.

In an aspect according to the preceding aspect, the septum (50) is directly carried by the container. In an aspect according to any one of the preceding two aspects, the septum (50) comprises a laminar body extending substantially along a plane parallel to, or containing, the longitudinal axis (X) of the container (20).

In an aspect according to any one of the preceding three aspects, the septum (50) extends from a first to a second end portion (50a, 50b), wherein the first end portion (50a) of the septum faces a separation zone between first and second access (8, 10).

In an aspect according to any one of the preceding four aspects, the first end portion (50a) of the septum (50) is disposed at the access (22) of the container (20).

In an aspect according to any of the preceding five aspects, the first end portion (50a) of the septum (50) is disposed at least partially within the intermediate collar (80) of the valve body (2).

In an aspect according to any one of the preceding six aspects, the second end portion (50b) of the septum (50) is disposed at the bottom portion (20b) of the container, spaced apart therefrom.

In an aspect according to any one of the preceding seven aspects, the first half-chamber directly faces the first access (8) of the valve body (2).

In an aspect according to any of the preceding eight aspects, the second half-chamber directly faces the second access (10) of the valve body (2).

In an aspect according to any one of the preceding nine aspects the septum is made of metallic material.

In an aspect according to any one of the ten preceding aspects, the septum is of ferromagnetic material.

According to the present invention, the valve comprises at least one magnetic device (14) at least partially arranged in the compartment (21) of the container (20).

In an aspect according to the preceding aspect, the magnetic device (14) extends for a preponderant part of the container (20) along the longitudinal axis (X).

The magnetic device (14) is configured to attract ferrous or ferromagnetic particles present in the fluid passing through the compartment (21). In an aspect according to any one of the preceding three aspects, the magnetic device (14) comprises:
- a casing (15) having an elongated shape and extending between a first end portion (15a) and a second end portion (15b),
- at least one magnet (16) housed in the casing (15).

In an aspect according to the preceding aspect the casing (15) is engaged to the container at the first end portion (15a).

In an aspect according to any one of the preceding two aspects the casing (15) extends from the bottom portion (20b) of the container (20) in the direction of the end portion (20a).

In an aspect according to any one of the preceding three aspects the casing (15) extends along a respective axis of prevalent development, which is parallel to the longitudinal axis (X) of the container. In an aspect according to any one of the preceding four aspects the casing (15) is joined in one piece to the container (20).

In an aspect according to any one of the preceding five aspects, the second end portion (15b) of the casing (15) is located at the access (22) of the container (20).

In an aspect according to any one of the preceding six aspects, the casing (15) comprises a hollow body defining a compartment within which the magnet (16) is housed.

In an aspect according to any one of the preceding seven aspects, the hollow body of the casing (15) has an insertion opening (15d) located at the first end portion (15a) of the casing (15) and through which the magnet (16) can be removed from or inserted in the compartment of the casing (15).

In an aspect according to any one of the preceding eight aspects, the casing (15) comprises only one insertion opening (15d).

In an aspect according to any one of the preceding nine aspects the casing compartment (15) is separate from the compartment (21) of container (20).

In an aspect according to any one of the preceding ten aspects, the casing compartment (15) is not in fluid communication with the container compartment (21).

In an aspect according to any one of the preceding eleven aspects, the casing compartment (15) is configured to communicate solely with the external environment.

In an aspect according to any one of the preceding twelve aspects, the magnet (16) extends within the casing (15) for a preponderant portion of the development thereof from the first end portion (15a) of the casing in the direction of the second end portion (15b).

In an aspect according to any one of the preceding aspects, the septum (50) has a substantially U-shaped shape.

In an aspect according to any one of the preceding thirteen aspects, the septum (50) is arranged at least partially around said casing (15).

The present disclosure also provides a process of making a valve (1) according to any one of the preceding aspects: this process is not part of the present invention.

In an aspect according to the preceding aspect, the process comprises the steps of:
- preparing the valve body (2),
- inserting the shutter (40) into the seat (3b) of the valve body (2),
- preparing the container (20),
- attaching the container (20) to the valve body (2).

In an aspect according to any one of the preceding two aspects, the valve body (2) is made by at least one selected from the group consisting of the following processes: die casting, molding, tool machining.

In an aspect according to any one of the preceding three aspects the step of preparing the valve body (2) comprises the sub-steps of separately preparing the first and second half-parts.

In an aspect according to any one of the preceding four aspects the seat (3b) is defined on the second half-part.

In an aspect according to any one of the preceding five aspects, the step of inserting the shutter (40) into the seat (3b) is performed prior to a step of coupling together the first and second half-parts.

In an aspect according to any one of the preceding six aspects, the process comprises, only after insertion of the shutter (40) into the seat (3b), the coupling of the first and second half-parts together. In an aspect according to any one of the preceding seven aspects, the second half-part comprises the inlet collar (3a), wherein the process comprises a step of locking the shutter within the valve body (2). In an aspect according to any one of the preceding eight aspects the process (and in particular said step of locking the shutter (40)) comprises the sub-phases of:
- inserting the shutter (40) into the seat (3b) defined on the central body,
- engaging the inlet collar on the central body to lock the shutter (40) into the valve body (2).

In an aspect according to any one of the preceding nine aspects, the container (20) is in one piece with the casing (15) of the magnetic device (14).

In an aspect according to any one of the preceding ten aspects, the container is made by molding simultaneously with the making of the container.

In an aspect according to any one of the preceding eleven aspects, the container (20) and the casing (15) are made in one piece of a plastic material.

In an aspect according to any one of the preceding twelve aspects, the container (20) and the casing (15) are made of at least one selected from the group of the following materials: ABS, PPS, PSU, PE, PTFE, PVC, PET.

In an aspect according to any one of the preceding thirteen aspects, the process, following the step of preparing of the container, comprises a step of inserting a magnet (16) within the casing (15).

In an aspect according to any one of the preceding fourteen aspects, the process comprises a step of preparing the septum (50) by a step of cutting a flat sheet.

In an aspect according to the preceding aspect, the step of cutting the flat sheet is performed by at least one selected in the group from the following processes: laser cutting, mechanical cutting.

In an aspect according to any one of the preceding sixteen aspects, the process, prior to engaging the container (20) and the valve body (2), comprises a step of inserting the septum (50) into the compartment (21) and engaging said septum (50) directly to the container (20).

According to another aspect of the present invention, it is provided a method of treating fluids by means of a valve (1) according to appended claims 1 to 12.

Said method comprises the steps of:
- introducing a fluid, optionally water, through the inlet (4),
- placing the shutter (40) in the first operating position in order to allow the fluid introduced through the inlet (4) to enter the compartment (21) of the container (20) passing through the first access (8) and consequently, passing through the second access to exit from the outlet (6).

Wherein said method further comprises a step of retaining by the magnetic device (14) solid particles, optionally ferrous or ferromagnetic, present in the fluid passing through the compartment (21) of the container (20).

In an aspect according to any one of the preceding three aspects said fluid comprises water.

According to another aspect of the present invention, it is provided a method of washing a valve according to any one of the appended claims 1 to 12.

Said method comprises at least the following steps:
- introducing a fluid, optionally water, through the outlet (6) so that this fluid can enter the compartment (21) of the container (20) through the second access (10),
- place the valve shutter (40) in the second operating position so that fluid present in the chamber (21) of the container (20) can pass through the first access (8) and flow out of the valve through the drain (30).

Wherein said method comprises a step of extracting the magnet (16) from the casing (15).

Said step of extracting the magnet (16) allows the release of the ferrous or ferromagnetic particles retained by the magnetic device within the compartment (21).

The method comprises a step of circulating the fluid through the compartment (21) of the container (20) - at least during the positioning of the shutter (40) in the second operating position and when the magnet (16) is placed outside the casing - so that the fluid can remove and drain through the outlet the ferrous or ferromagnetic particles stored inside the compartment (21).

The ferrous or ferromagnetic particles collected within the compartment (21) are those retained by the magnetic device with the magnet (16) inserted into the casing (15) which are then released by the magnetic device (14) within the compartment (21) following removal of the magnet (16) from the casing (15).

In an aspect the method uses a valve (1) comprising the bypass opening (90), wherein during the fluid supply through the outlet (6), at least a portion of said fluid passes directly through the bypass opening (90) and subsequently through the first and second through-openings (41, 42) of the shutter, without passing through the container compartment. In an aspect according to the preceding aspect during the supply of fluid through the outlet (6), at least a portion of said fluid reaches the drain (30) by passing directly through the bypass opening (90), optionally without passing through the compartment (21) of the container (20).

In an aspect of the method of washing the valve said fluid comprises water.

Another aspect of the present invention concerns a plumbing system (100) comprising a valve (1) according to any one of the appended claims 1 to 12.

Said system (100) comprises:
- at least one feed line (101) connected to the inlet (4) of the valve (1), said feed line (101) being configured to allow fluid to enter the first channel (3) via the inlet (4),
- an operating device (103) for processing fluids,
- a supply line (102) which puts the outlet (6) of the valve (1) into fluid communication with the operating device (103) for fluid treatment.

According to the present invention, the operating device (103) is a boiler (103) for heating fluid.

The boiler (103) is configurable at least between:
- an accumulation condition during which said boiler is configured to receive fluid arriving from the valve (1), wherein the valve shutter (40), in the accumulation condition, is disposed in the first operating position, and in a drain condition during which said boiler is configured to send fluid to the valve (1), wherein the valve shutter (40), in the boiler drain condition, is positioned in the second operating position.

### BRIEF DESCRIPTION OF THE DRAWINGS

Embodiments and aspects of the invention will be hereafter described with reference to the attached drawings, provided for exemplifying and therefore not limiting purpose, wherein:
- Figure 1 is a perspective view of a valve in accordance with aspects of the present invention;
- Figures 2-4 are exploded views of the valve, or parts thereof, in accordance with aspects the present invention;
- Figure 5 is a perspective view of a valve container housing a septum capable of dividing a compartment of the container into two half-chambers;
- Figure 6 is a perspective view of a valve body of the valve with an operating element associated with said valve body;
- Figure 7 is a schematic view of a plumbing system comprising a valve in accordance with aspects of the present invention;
- Figures 8 and 10 are longitudinal cross-sectional views of the valve in accordance with aspects of the present invention in a normal operating condition and in a drain condition, respectively;
- Figure 9 is a top sectional view of the valve in accordance with aspects of the present invention;
- Figure 11 is a longitudinal cross-sectional perspective view of an embodiment of a valve in accordance with aspects the present invention.

### DEFINITIONS AND CONVENTIONS

In the present detailed description corresponding parts illustrated in the various figures are indicated by the same reference numbers. The figures may illustrate objects by means of non-scaled representations; therefore, parts and components illustrated in the figures relating to aspects of the invention may be in the form of schematic representations.

The term solid particles means ferrous and/or non-ferrous material finely divided and dispersed in a fluid, in particular a liquid such as for example water. The particles may be part of a suspension defined by a component in the solid state, i.e. the particles themselves, finely dispersed within the majority component which is in the liquid state, for example water.

The terms magnet or magnetic, referring to a body or component, means that said body or component has at least one part with substantially stable magnetic properties or at least one part which is magnetizable so as to exhibit magnetic properties for at least a period of time.

### DETAILED DESCRIPTION

### Valve 1

A valve for plumbing systems has been indicated with 1. The valve may for example be used in heating or conditioning systems, for industrial or domestic use. The valve 1 is configured to receive a fluid, in particular water, and treat it, for example, by retaining solid particles present in the fluid flowing through the valve 1.

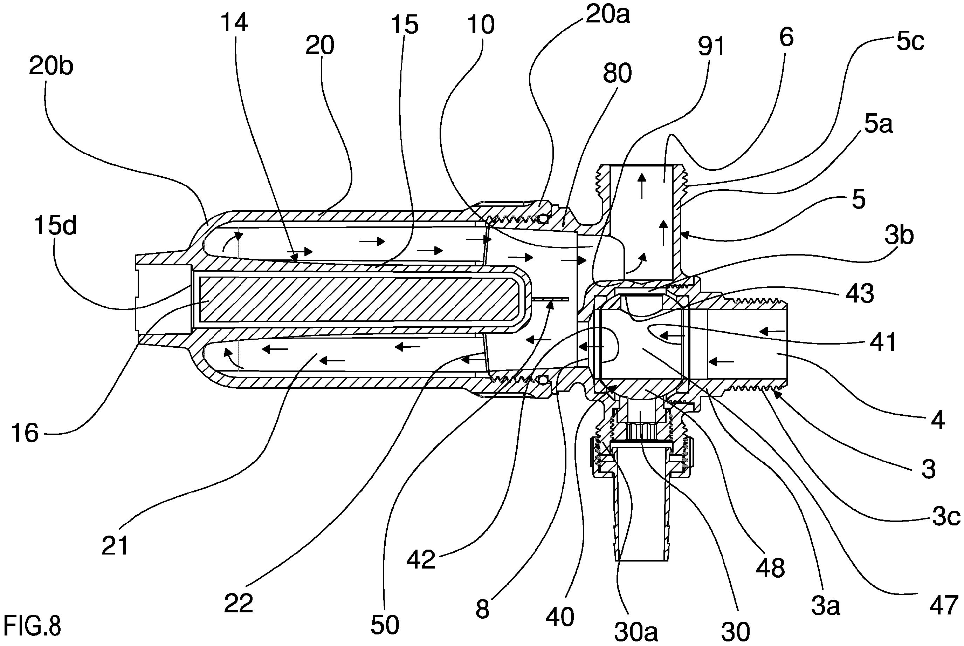

The valve comprises a valve body 2 presenting at least one inlet 4, at least one outlet 6, at least one first and one second access 8, 10 and at least one drain 30 each of which is configured to allow passage of fluid. In particular, as can be seen from figures 8, 10 and 11, the valve body 2 comprises at least a first and a second channel 3, 5 configured to allow the flow of fluid through the valve body 2; as will be better described later the first and the second channels 3, 5 are both in fluid communication with a container 30 of the valve 1 and configured to introduce into and/or receive from the container 20 fluid, for example water.

The first channel 3 extends between the inlet 4 and the first access 8 along a predetermined, optionally rectilinear trajectory. In detail, the first channel 3 extends along a first rectilinear direction (not illustrated in the attached figures). As can be seen, the inlet 4 and the first access 8 are aligned along said first rectilinear direction of extension of the first channel 3. The inlet 4 and the first access 8 are substantially facing each other; both have, in a non-limiting manner, a fluid passage section presenting a circular shape. Such passage sections may be substantially identical in size and/or shape. In the appended figures, a valve 1 has been illustrated in which the inlet 4 and the first access 8 present, in a non-limiting manner, the same circular shape, but in which the passage section of the inlet 4 is larger than the passage section of the access 8. For example, the ratio of the fluid passage section of the inlet to the fluid passage section of the first access may be greater than 1.1, optionally comprised between 1.2 and 2.

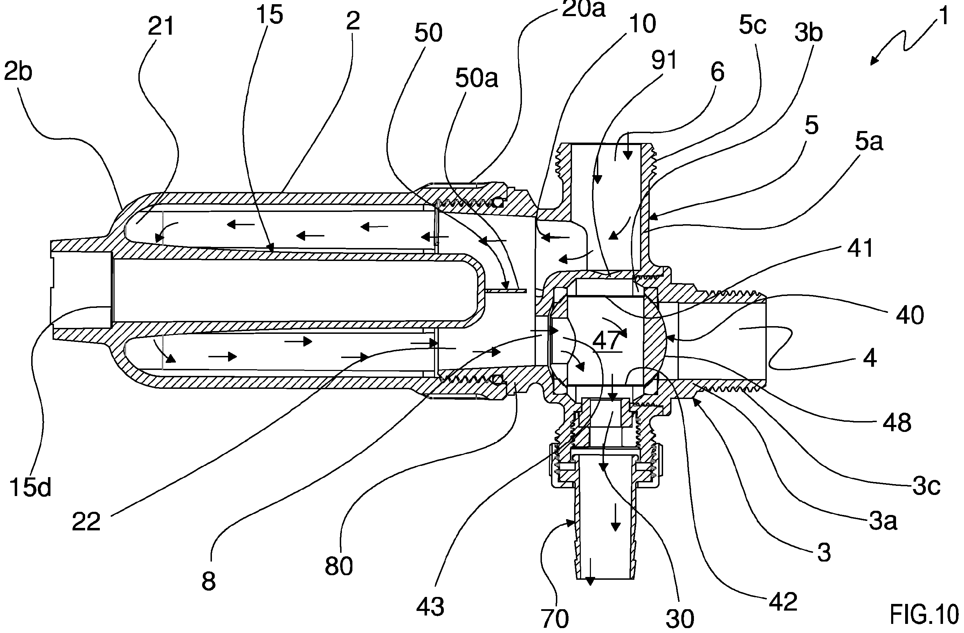

The second channel 5 is distinct from the first channel 3 and extends from the outlet 6 to the second access 10 of the valve body 2. The second channel 5 extends along a substantially L-shaped trajectory. In particular, a first section of the second channel 5 extending from the outlet 6 to an intermediate portion of the second channel 5 extends orthogonally to the first channel 3 (i.e., orthogonal to the first rectilinear direction of extension the first channel 3), while a second portion of the second channel 5 defined between said intermediate portion and the second access 10 is positioned adjacent to a terminal portion of the first channel 3 and extends parallel to the latter. As can be seen by example from figures 8 and 10, the second channel 5 and the first channel 3 are, for a terminal stretch, side by side: the first and the second accesses 8, 10 are placed next to each other, both directly facing the container 20.

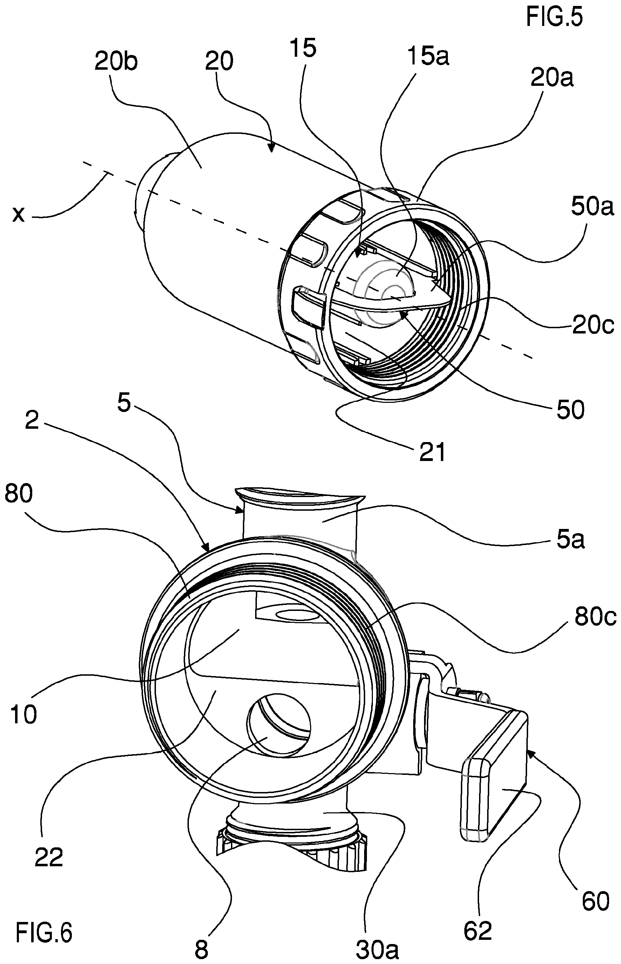

Also the outlet 6 of the second channel 5 presents, in a non-limiting way, a fluid passage section having a circular shape; as visible for example from figure 6, the second access 10 may present a different shape, for example it may present a substantially trapezoidal shape or a substantially semicircular shape. Obviously, the possibility of a second access 10 presenting a circular shape like that of the outlet 6 is not excluded.

The fluid passage sections of the outlet 6 and of the second access 10 may be substantially identical in size and/or shape. In the accompanying figures, a valve 1 has been illustrated in which the outlet 6 and the second access 10 have, in a non-limiting manner, a different shape and a different fluid passage section: the fluid passage section of the second access 10 may be larger than the fluid passage section of the outlet 6. For example, the ratio of the fluid passage section of the second access 10 to the fluid passage section of the outlet 6 may be greater than 1.1, optionally comprised between 1.2 and 2.

As can be seen from Figures 8, 10 and 11, at least part of the first channel 3 is in one piece with at least part of the second channel 5: in the examples shown, the entire second channel 5 is in one piece with at least part of the first channel 3. The terminal portion of the second channel 5, adjacent to the first channel 3, is separated from the latter by means of a partition wall 91. In fact, the partition wall 91 delimits at least part of the terminal portion of the first channel 3 and at least part of the terminal portion of the second channel 5. Said partition wall 91 may have one side facing the outlet 6 and an opposite side facing the drain 30.

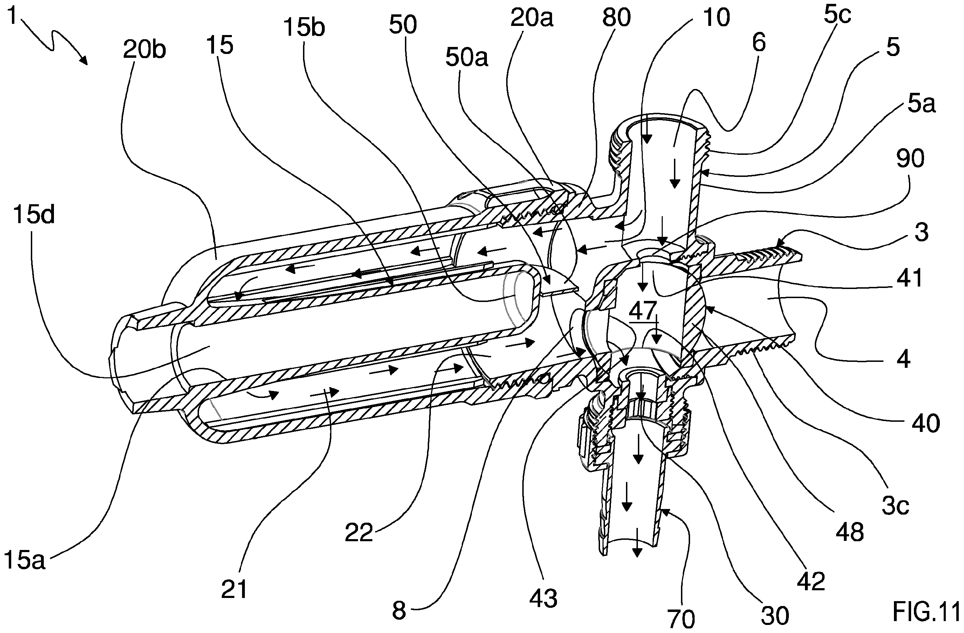

The partition wall 91 may be blind to prevent direct communication between the first and second channels 3, 5 as illustrated in Figures 8 and 10; alternatively, a bypass through opening 91 (see Figure 11) may be provided on the partition wall 91 that places the first channel 3 in direct fluid communication with the second channel 5.

As mentioned above, the valve body 2 further comprises a drain 30 configured to allow fluid to be expelled from the valve body 2. The drain 30 is in fluid communication with the first channel 3 and is substantially facing the outlet 6. In particular, the drain 30 is substantially opposed to the outlet 6 with respect to a rectilinear connection direction orthogonal to the first direction of extension of the first channel 3. The drain 30 is in direct fluid communication with a portion of the first channel 3 interposed between the inlet 4 and the first access 8, optionally at an intermediate portion of the first channel 3. The drain 30 is in one piece with the second channel 5 and in one piece with at least part of the first channel 3.

The drain 30 has a fluid passage section having a circular shape. The fluid passage section of the drain 30 may be substantially identical in size and/or shape to the fluid passage section defined by the inlet 4; thus the fluid passage section of the drain may be greater than the fluid passage section of the first access 8.

The channels 3, 5 and 30 described above may be defined by hollow collars joined together, for example in one piece, or may be at least partially formed by conduits excavated within a solid body. In the figures shown herein, in a non-limiting way, the valve body 2 includes a first half-part (formed in one piece) on which the first access 8, the second access 10, the outlet 6 and the drain 30 are defined, and a second half-part on which only the inlet 4 is defined. In particular, the entire second channel 5 and at least a portion of the first channel 3 is formed on the first half-part: said portion of the first channel 3 formed on the first half-part defines at least the first access 8 and communicates with the drain 30 also formed on said first half-part.

In detail, the valve body 2 consists only of the first and second half-parts which are distinct from each other and engaged in a removable manner, optionally by means of at least one of: a threaded coupling, a quick coupling, a bayonet engagement. The figures show a non-limiting embodiment where an engagement by means of a threaded coupling is adopted. Again, the first and the second half-parts are distinct elements, each of which is made in one piece, for example by a die-casting, molding, machine processing.

As can be seen from the figures, a seat 3b is defined within the first channel 3: the seat is interposed between the inlet 4 and the first access 8, and faces the drain 30. As it will be better described later, the seat 3b is configured to receive a shutter 40 configured to intercept the fluid passing through said first channel 3. The seat 3b is partially defined on the first half-part and partially on the second half-part; in fact, only in conditions of mutual engagement the first and second half-part define the seat 3b. The seat 3b is interposed between the outlet 6 and the drain 30. In particular, the seat is defined in correspondence of a zone of intersection between the first direction of extension of the first channel and an ideal straight line extending between the outlet 6 and the drain 30 (see, for example, figure 8). In greater detail, the valve body 2 has a central body from which emerges a hollow inlet collar 3a which defines said inlet 4; the inlet collar 3a substantially defines a portion of the first channel 3 starting from the inlet 4 up to the seat 3b, that is up to a middle portion of the first channel; the remaining portion of the first channel extending between the seat 3b and the first access is obtained directly (in one piece) on the central body. In particular, the inlet 4 is defined on an initial portion of the inlet collar 3a. The inlet collar 3a is removably engaged to the central body, for example by means of a threaded coupling, a quick coupling, or a bayonet engagement. The inlet collar 3a extends along a rectilinear direction that essentially coincides with the first direction of extension of the first channel 3. The inlet collar 3a further comprises a engagement portion 3c configured to allow connection of the valve body 2 to a delivery line 101 of a plumbing system 100, for example a line connecting to a water supply system (e.g., a conduit configured to carry incoming water from the water supply system). The engagement portion 3c of the inlet collar 3a may comprise, as illustrated in the accompanying figures, an external thread. In fact, the inlet collar 3a forms a sort of protrusion of the valve body 2 suitable to connect to the delivery line 101 of a plumbing system 100.

The valve body 2 further comprises a hollow outlet collar 5a also emerging from the central body along a second rectilinear direction, substantially orthogonal to the rectilinear direction of the inlet collar 3a. The outlet collar 5a substantially defines a terminal portion of the second channel extending from the outlet 6 to a middle portion of the second channel; the remaining portion of the second channel 5 is instead obtained directly in the central body. The portion of the central body defining the second channel 5 defines the second access 10: the outlet 6 is defined on an end portion of the outlet collar 5a. In contrast to the inlet collar 3a, the outlet collar 5a is joined in one piece with the central body. The outlet collar 5a has a respective engagement portion 5c configured to allow connection of the valve body 2 to a supply line 102 of a plumbing system 100, for example a connection line between a boiler and the outlet 6 of the valve 1. The engagement portion 5c of the outlet collar 5a may comprise, as illustrated in the accompanying figures, an external thread. In fact, the outlet collar 5a forms a sort of protrusion of the valve body 2 suitable to connect to the supply line 102 of a plumbing system.

The valve body 2 further comprises a hollow drainage collar 30a also emerging from the central body along a third rectilinear direction, substantially orthogonal to the first direction of extension of the first channel 3 and substantially parallel to the second direction of extension of the exit collar 5a; the drainage collar 30a is substantially opposed to the outlet collar 5a with respect to the central body and extends in opposition to the latter: the outlet collar 5a and the drainage collar both extend from the central body (from opposing portions thereof) along the same or parallel directions but having opposite orientations. The drain 30 is defined on an end portion of the drainage collar 30a which is joined in one piece to the central body.

The drain collar 30a also has an engagement portion 30c configured to allow connection of the valve body 2 to a drain line 104 or a drain connection 70 of a plumbing system 100. The engagement portion 30c of the drainage collar 30a may include, as illustrated in the accompanying figures, an external thread.

The valve body 2 further comprises a hollow intermediate collar 80 joined in one piece to the central body and emerging from the latter along a fourth direction substantially parallel to the first direction of extension of the first channel and substantially orthogonal to the second and third directions of the outlet collar 5a and the drainage collar 30a, respectively. In detail, the intermediate collar 80 emerges from the central body at a side opposite to that of the inlet collar 3a with respect to the central body. In fact, the inlet collar 3a, the outlet collar 5a, the drainage collar 30a and the intermediate collar 80 are arranged substantially according to a "+" configuration with respect to the central body. The intermediate collar 80 extends from the central body from an area in which the first and second accesses 8, 10 are placed side by side. In detail, as visible from Figures 6, 8, 10 and 11, the first and second accesses 8, 10 are defined entirely within a passageway section of the intermediate collar 80. The intermediate collar 80 includes an engagement portion 80c configured to couple with a respective engagement portion 20c of the container 20. For example, the engagement portion 80c of the intermediate collar 80 may include an external thread while the engagement portion 20c of the container 20 may include an internal thread.

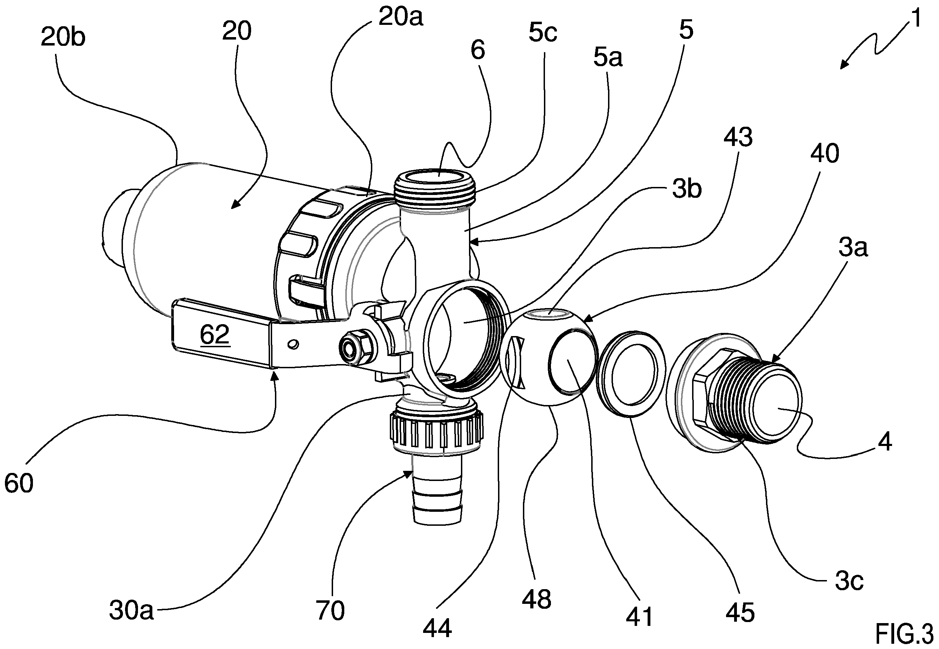

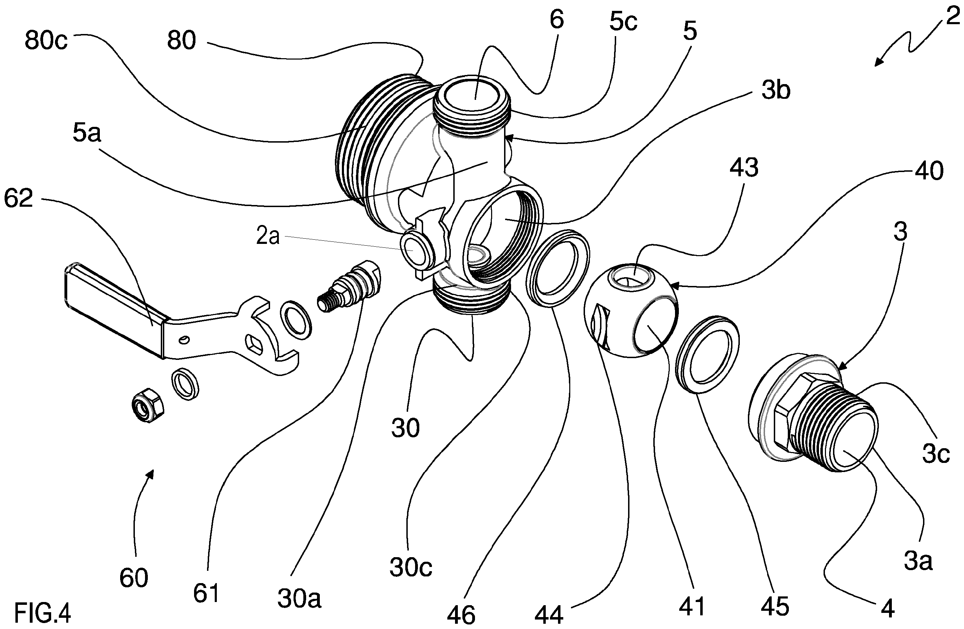

As a matter of fact, the central body, together with the outlet collar 5a, the drain collar 30a and the intermediate collar 80 are formed in a single piece and define the first half-part of the valve body 2. The second half-part only includes the inlet collar 3a, which is engageable directly to the central body by means of a threaded coupling; see Figures 3 and 4, which show the internal thread of the central body suitable to accommodate an external thread defined on the inlet collar, on the opposite side to the engagement portion 3c.

The valve body 2 may be made at least in part or entirely of a metallic material; for example, it may be made using at least one selected from the group of the following metallic materials: steel, brass, bronze, copper and its alloys, or aluminum and its alloys. The valve body 2 may alternatively be made at least in part (or entirely) of plastic material; for example, it may be made using at least one selected from the group of the following materials: ABS, PPS, PSU, PE, PTFE, PVC, PET. Alternatively, the valve body 2 may be made using both metallic material and plastic material, for example the materials listed above.

As mentioned above, a seat 3b is defined within the first channel 3; a shutter 40 is housed in the seat and is configured to intercept fluid passing through said first channel 3. In particular, said shutter 40 is housed in the seat 3b in interposition between a first and a second gasket 45, 46 having a circular section (see figures 3 and 4). The shutter 40 is substantially blocked inside the central body as a result of the engagement of the inlet collar 3a to the central body. As can be seen, for example, from figure 8, the inlet collar 3a substantially acts as a blocking element for the shutter 40 which remains blocked between the first and second seals 45, 46 inside the seat 3b.

The shutter 40 may have a substantially spherical conformation, and is movable relatively to the central body of the valve body 2 at least between a first and a second operative position around an axis orthogonal to an ideal plane defined by the first rectilinear direction of extension of the first channel and the third rectilinear direction of the drainage collar 30a. In fact, the shutter 40 is movable by rotation along the aforementioned axis of an angle between 70° and 110°, optionally substantially 90°.

In the first operative position, the shutter 40 is configured to allow fluid communication between the inlet 4 and the first access 8 to thus allow fluid to flow inside the container 20. As visible in figure 8, in the first operative position, the shutter 40 entirely occludes the drain 30, allowing fluid to flow exclusively along the first channel 3. Vice versa, as for example shown in figures 10-11, in the second operating position, the shutter 40 allows fluid communication between the first access 8 and the drain 30 to allow fluid to be expelled from the valve body 2 via the drain 30. The shutter 40, in the second operating position, substantially occludes the inlet collar 3a thereby preventing fluid from passing through the inlet 4.

As shown in Figures 3, 4, 8, 10-11, the shutter 40 includes a first, a second and a third through-openings 41, 42, 43, which in fluid communication among them by means of a central cavity 47 of the shutter 40 itself. In particular, the first and second through openings 41, 42 are facing each other, while the third through opening 43 is angularly offset with respect to the other openings 41, 42 and directly faces a closing wall 48 of the shutter 40. The first, second and third through openings 41, 42, 43, are configured to allow/prevent fluid flow through the valve 1, depending on whether the shutter 40 is in the first or second operating position. In detail, in the first operating position of the shutter 40, the first through opening 41 is facing the first inlet 4, while the second through opening 42 is directly facing the first access 8: the first and second through openings 41, 42 are aligned along the first direction of the first channel 3. In the first operative position, the shutter 40 therefore allows the fluid entering the valve body 2 through the inlet collar 3a to cross the entire first channel 3 and reach the container 20. In the first operative position of the shutter 40, the closure wall 48 prevents fluid communication between the drain 30 and the first channel 3 (figure 8). In the first operative position of the shutter 40, the third through opening 43 is aligned with the second direction of the outlet collar 5a, directly facing the partition wall 91 of the central body of the valve body 2. In the second embodiment of the valve 1 shown in figure 11, the third through opening 43 is configured to allow fluid to pass through the bypass opening 90 to allow incoming fluid from the inlet 4 to reach the second channel 5 without crossing the container 20.

In the second operating position of the shutter 40, the third through opening 43 is directly facing the first inlet 8, while the second through opening 42 is directly facing the drain 30. In the second operative position, the closure wall 48 occludes the inlet channel 3, interdicting fluid communication between the inlet 4 and the drain 30, as well as preventing fluid flow between the inlet 4 and the container 20 (Figure 10). In the second operating position of the shutter 40, the valve 1 can receive fluid flow incoming via the outlet 6; in this condition at least part of the fluid can FLOW from the outlet 6 towards the drain 30 passing through the container.

As will be better described later, in the case where solid particles (e.g. ferrous particles) have been collected in the container 20, the fluid flowing through the same container 20 allows to draw such particles and guide them externally to the valve 1 through the drain 30. It is also useful to note that in the second embodiment of the invention of figure 11, in the second operating position of the shutter 40, at least some of the fluid flowing via outlet 6 passes through the bypass opening 90 without flowing through container 20 but directly reaching drain 30. Allowing fluid to flow through the bypass opening 90, reduces pressure drops within the plumbing system 100.

The shutter 40 may be made at least in part or entirely of a metallic material, for example, it may be made using at least one selected from the group of the following metallic materials: steel, brass, bronze, copper and its alloys, or aluminum and its alloys. The shutter 40 may alternatively be made at least in part (or entirely) of a plastic material; for example, it may be made using at least one selected from the group of the following materials: ABS, PPS, PSU, PE, PTFE, PVC, PET. Alternatively, the shutter 40 may be made using both metallic material and plastic material selected in the above lists. The shutter 40 may further comprise a engagement portion 44 defined at the side wall of the shutter 40. The engagement portion 44 is configured to receive in engagement a valve operating element 60 of the valve 1 configured to allow a user to move the shutter 40 from the first to the second operating position and vice versa.

In particular, the operating member 60 includes an engagement portion 61 hinged within an engagement seat 2a of the valve body 2 and configured to stably connect to the engagement portion 44 of the shutter 40 such that the latter and said engagement portion 61 rotate together.

The operating element 60 further comprises a gripping portion 62 (such as a lever or a knob) disposed outside the valve body 2 and constrained to the engagement portion 61 on the opposite side of the shutter 40; said gripping portion 62 is graspable by a user to allow the movement of the shutter 40 from the first to the second operative position, and vice versa. In the examples shown, the gripping portion 62 substantially defines a lever, connected with the engagement portion 61, graspable by a user to allow the movement of the shutter 40 from the first to the second operating position, and vice versa.

As mentioned above, the valve 1 further comprises a container 20 defining a compartment 21, engaged to the valve body 2 in correspondence to said first and second accesses 8, 10: the container is configured to receive and circulate within itself the fluid arriving from the first channel 3 or the second channel 5.

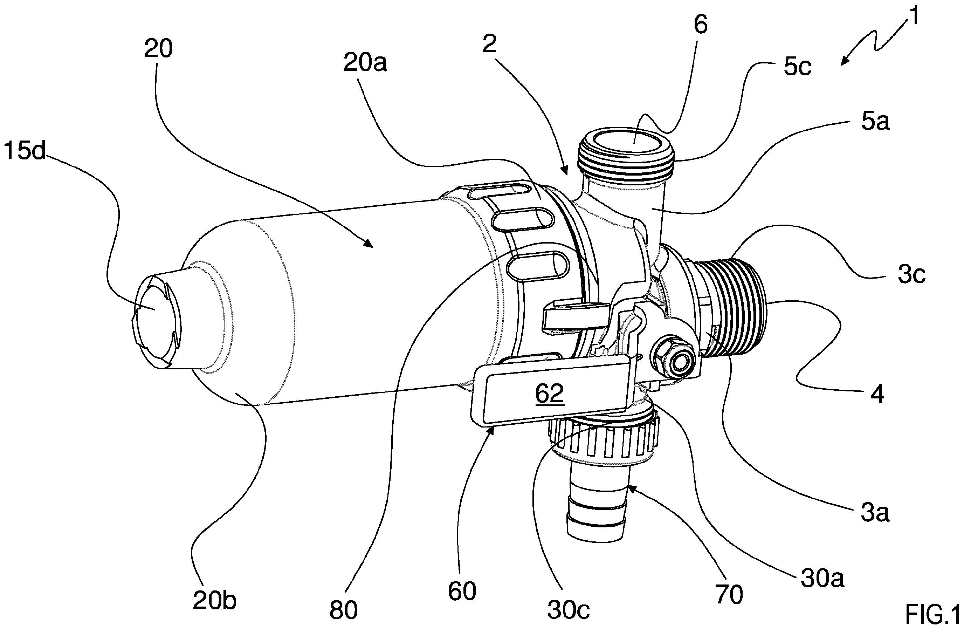

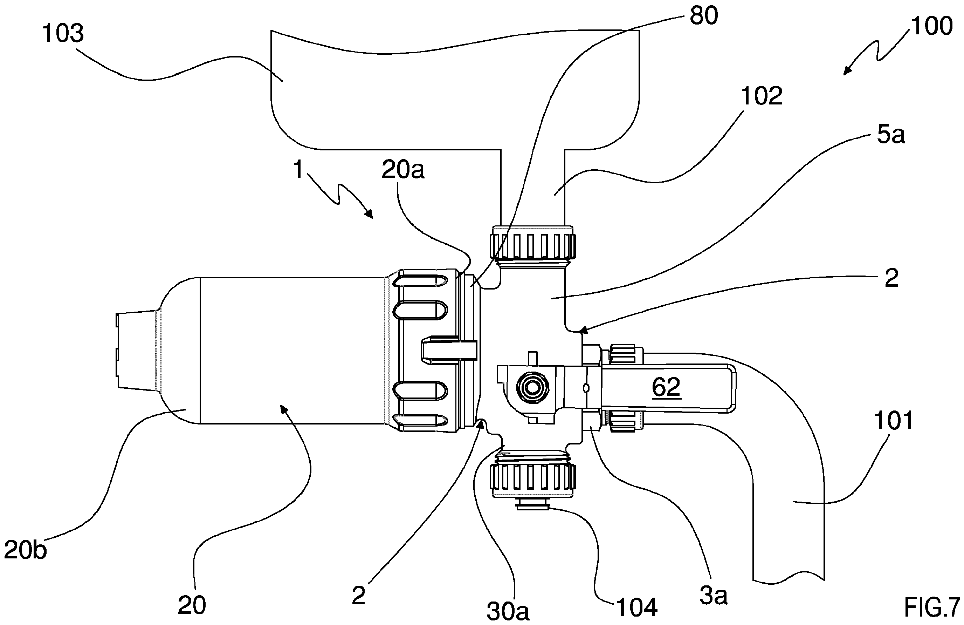

Figures 1 to 4 illustrate an operating element 60 arranged in a starting position, in which the shutter 40 is arranged in the first operating position, and in which the gripping portion 62 extends substantially along a direction parallel to the axis X of the container. Obviously, the possibility of arranging the operating element 60 in a different initial position according to the needs/size of the plumbing system on which it is installed cannot be excluded. For example, in figure 7, the operating element 60 is configured to arrange the shutter in the first operative position: however, the gripping portion is arranged on an opposite side with respect to the container 20. Independently, from the initial position of the gripping portion 62, the operating element 60 is configured to rotate the shutter from the first to the second operative position, and vice versa, by an angle substantially of 90°.

The container 20 may have a hollow tubular structure, having a circular cross-section, which defines within it a compartment 21, configured to house a magnetic device 14. The container 20 may develop along a longitudinal X axis between a head portion 20a and a bottom portion 20b. In particular, the container 20 is engaged to the central body of the valve body 2 at the head portion 20a by means of the engagement portion 20c, configured to couple with the engagement portion 80c of the intermediate collar 80 of the same valve body 2.

The container 20 and the valve body 2 are distinct from each other and removably engaged by means of a threaded coupling. However, it is not excluded the possibility of providing the engagement portion 20c of the container 20 and the valve body 2 with a different design, for example including a quick coupling, a bayonet engagement, or other removable coupling system.

In detail, the container 20 has at least one respective access 22 defined at the head portion 20a and placed in fluid communication directly with the first and second accesses 8, 10, of the valve body 2, configured to allow the passage of fluid in and/or out of the compartment 21. In fact, the first and second accesses 8, 10 are both facing the at least one access 22 of the container 20.

The fluid entering the valve body 2, through the inlet 4 and the first access 8, is conveyed through the access 22 of the container 20 inside the compartment 21; in the same way, the fluid arriving from the outlet 6 is introduced into the compartment 21 by means of the second access 10: the fluid introduced into the compartment through the outlet reaches the first access 8 and enters the first channel 3. In other words, the compartment 21 of the container communicates with the valve body exclusively through the access 22 of the container.

Structurally, the access 22 has a fluid passage section greater than a respective fluid passage section of the first and second accesses 8, 10. In detail, the fluid passage section of the access 22 is greater than the sum of the fluid passage sections of the first and second accesses 8 and 10: the access 22 entirely contains within it the first and second accesses 8, 10. In other words, the container access 22, if seen according to a view along the longitudinal X axis, has a fluid passage section that entirely contains the first and second accesses 8, 10.

As visible from the figures, the container 20 includes a single access 22 defined at the head portion 20a; the container 20 at the bottom portion is closed and prevents fluid from escaping from the container except through the access 22: thus, the compartment 21 of the container communicates with a further environment (for example with the first and second accesses 8, 10 of the valve body) solely by means of said access 22 of the container.

As described above, the container 20 is engaged to the valve body by means of the intermediate collar 80. As visible, for example, from the cross-sectional views of Figures 8 and 10, the intermediate collar 80 is engaged directly to the container 20 at the access 22: the intermediate collar 80 is configured to allow fluid communication between the first and second accesses 8, 10 of the valve body 2 and the access 22 of the container 20.

The container 20 may be made of a plastic material, such as at least one of the following materials: ABS, PPS, PSU, PE, PTFE, PVC, PET. The container may be obtained by a molding or casting process.

According to the present invention, valve (1) comprises a magnetic device 14 disposed at least partially in the compartment 21 of the container 20 and configured to attract to it ferrous or ferromagnetic particles present in the fluid flowing through the compartment 21. In fact, the magnetic device 14 is configured to clean the fluid circulating in the compartment 21 of the container from any solid (ferrous) particles present in the fluid.

In particular, the magnetic device 14 comprises an enclosure 15 having an elongated tubular hollow shape defining a compartment configured to house a magnet 16 of the magnetic device (the magnet may be of the permanent type). In particular, the casing 15 extends between a first end portion 15a, at which the casing 15 is engaged to the container 20, and a second end portion 15b disposed proximate to the valve body 2. In other words, the casing 15 extends from the bottom portion 2b of the container 20 at which it is joined in one piece to the latter, in the direction of the head portion 2a, along a respective axis of prevailing development parallel to the longitudinal X axis of the container 20. The second end portion 15b of the casing 15 is then disposed at the access 22 of the container 20.

As visible from the figures, the casing 15 has an insertion opening 15d arranged at the first end portion 15a and through which it is possible to insert and remove the magnet 16 from the casing 15: the magnet is removably engaged within the casing 15. However, it is useful to note that the casing 15 is separated from the compartment 21 of the container 20; the casing 15 is therefore not in fluid communication with the compartment 21 of the container, but only with the external environment through said insertion opening 15d.

As mentioned above, the magnetic device 14 comprises at least one magnet 16 configured to attract, under operating conditions of the valve 1, the ferrous particles present in suspension in the fluid circulating inside the valve 1. In fact, the ferrous particles are deposited on an external surface of the casing 15 due to the magnetic attraction exerted on them by the magnet 16. As will be better described below, in order to release the ferrous particles retained by the magnetic device 14, it is sufficient to extract the magnet 16 from the casing 15: following extraction of the magnet 16, the particles are deposited in the compartment 21 and can be, for example, drained through the drain 30.

In the accompanying figures, a valve comprising within the housing a magnetic device 14 has been illustrated. It is not excluded the possibility to provide, always inside the housing, in addition to the magnetic device, one or more filtering elements (filtering membranes or mechanical separation septa), and/or one or more flow deviators configured to allow the treatment of the fluid circulating in the compartment 21 of the container 20.

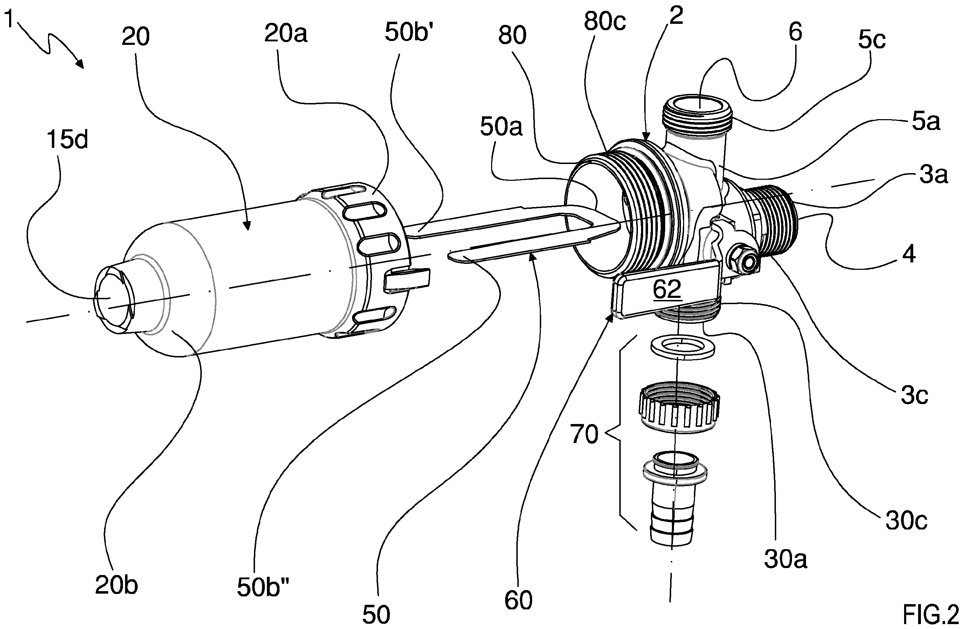

As visible from the figures, the valve 1 may further comprise a septum 50 disposed at least partially in the compartment 21 of the container 20 and configured to divide the same compartment 21 into a first and a second semi-chamber in fluid communication with each other. As visible in figure 2, the septum 50 is directly carried by the container 20 and has a laminar body, with a substantially "U" shape, extending along a direction parallel to the longitudinal X axis of the container 20, from a first to a second end portion 50a, 50b. In correspondence to the first end portion 50a, the septum 50 is facing the first and second accesses 8, 10 and placed in correspondence to the access 22 of the container 20. The first end portion 50a of the septum 50 is therefore located at least partially within the intermediate collar 80 of the valve body 2. In correspondence to the second end portion 50b, the septum 50 is instead facing the back wall 2b of the container 20 and is spaced apart from the latter. In particular, the septum 50 includes a first and second tabs 50b', 50b" opposed to each other with respect to the housing 15 of the magnetic device 14, the first and second tabs 50b', 50b" being joined in one piece and emerging substantially along parallel directions from the first end portion 50a of the septum.

As shown in Figures 8-11, the septum 50 is configured impose a certain path to the fluid entering the container 20 through the first and second half-chambers. In other words, the fluid entering the compartment 21 of the container is forced to continue along a direction parallel to the longitudinal X axis, towards the bottom wall 2b of the container 20. At the bottom portion 2b, the first and second half-chambers of the container 21 are in fluid communication with each other, such that the fluid is allowed to transit back into the interior of the compartment 21 along a direction parallel to the longitudinal X axis towards the end portion of the second channel 5. By imposing a forced path on the fluid transiting within the container 20, the septum 50 may, for example, allow the fluid itself to be subjected to an extended period of exposure to the attractive action of the magnet 16.

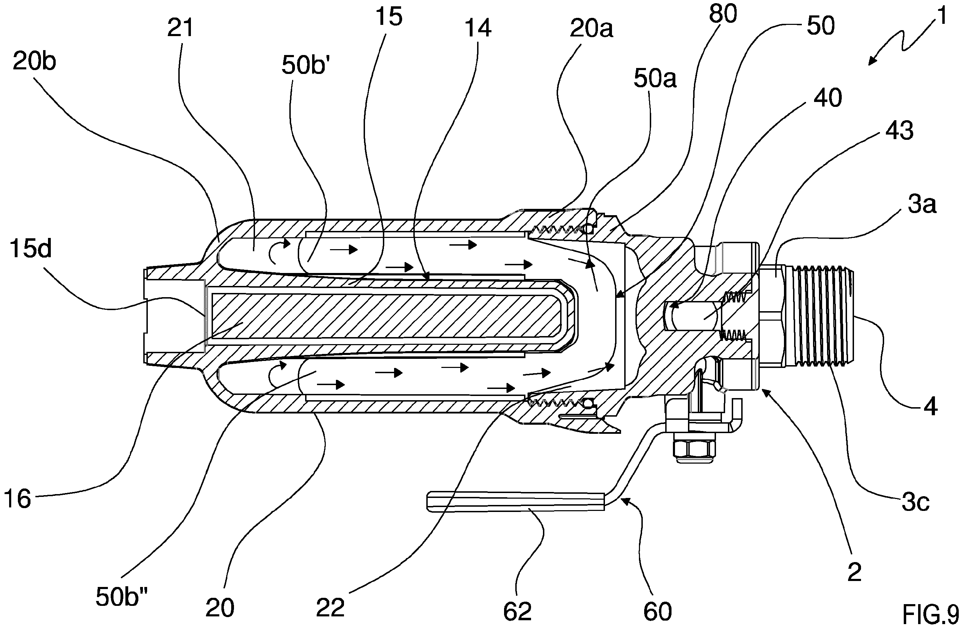

It is further useful to note that the septum 50 imposes a forced movement of the fluid within the compartment 21 both during a condition of normal valve use (Figures 8 and 9), as well as during a condition of valve drain (Figures 10 and 11).

In particular, during a condition of normal use of the valve 1, the shutter 40 is in the first operating position, allowing the flow of the incoming fluid from the first channel 3 to reach the compartment 21 through the first access 8. The septum 50 thus forces the fluid entering the compartment 21 to cross the first and second half-chambers, thus contacting the casing 15 along its entire surface. The septum 50 thus makes it possible to decrease the speed at which the fluid enters the compartment 21 and to maximize the surface of contact between the fluid and the casing 15. By doing so, it is therefore possible for the magnet 16 to attract to itself a high percentage of ferrous particles which deposit on the casing 15. As previously mentioned, the fluid crossing the first half-chamber, flows into the second half-chamber in correspondence to the bottom wall of the container 20. The fluid then crosses the entire second half-chamber up to correspond to the second access 10 of the valve body 2, to enter the second channel 5 and be ejected by the valve 1.

Conversely, as shown in Figures 10 and 11, during a valve drain condition, the shutter 40 is in the second operating position in which it prevents fluid from passing through the inlet 4. In this operating condition of the shutter 40, the fluid passing through the second channel 5 is directed within the compartment 21 to reach the drain 30. In particular, the fluid travels an inverse path with respect to what it would do during the condition of normal use of the valve, travelling through the second half-chamber and subsequently through the first half-chamber to be then expelled through the drain 30. It is useful to note that in the condition of valve drain, the magnet 16 is removed from the housing 20, allowing the fluid entering the compartment 21 and coming from the second channel 5, to convey towards the drain 30 the ferrous particles deposited in the compartment and trapped by the magnet when it was inserted in the housing.

### Process of making valve 1

The present disclosure also provides a process for making a valve 1: the process is not part of the present invention.

The process comprises a step of preparing the valve body 2. Such step may comprise preparing the first and second half-parts as separate and distinct bodies. Said step may be followed by at least one of the following processes: moulding, machining, casting in particular die casting.

Following the preparation of the two half-parts, the process provides for the insertion of the shutter in the seat 3b. This step envisages the insertion of the shutter 40 in the first half-part where a part of the seat 3b is defined; subsequently, the process envisages a step of coupling the second half-part (where the remaining part of the seat 3b is defined): in particular coupling of the first and second half-parts allows to define the seat 3b and block the shutter 40 inside the latter. Together with the shutter 40, the process may provide for the insertion in the central body of the first and second gaskets 45, 46 in such a way that the shutter is interposed between the two gaskets to allow a fluid seal between shutter wall and the valve body.

The process also includes a step of preparation of the container 20, which can be made of plastic material and for example obtained by casting or moulding. Once the container 20 has been prepared, it is engaged to the valve body 2 by coupling the engagement portions 2c and 80c respectively of the container 20 and of the intermediate collar of the valve body 2.

In case the valve further comprises the magnetic device 14, the process may provide for the simultaneous making of the container 20 and the casing 15, which may be made in one piece. Container and casing may be made simultaneously by moulding, for example in plastic material, optionally in at least one selected from the group of the following materials: ABS, PPS, PSU, PE, PTFE, PVC, PET. Only after the container and casing have been made the process include a step of inserting the magnet into the casing compartment through the insertion opening 15d.

Furthermore, in the case where the valve further comprises the septum 50, the process comprises a step of arranging said septum 50 by means of a step of cutting a flat plate; said step of cutting the flat plate my performed by means of at least one selected in the group from the following processes: laser cutting, mechanical cutting. The septum 50 is engaged within the compartment 21 of the container before connecting the container 20 to the valve body 2: following the engagement of the septum 50 within the container 20, the process provides the step of engagement between the container 20 and the valve body 2.

### Fluid treatment method

It is also an aspect of the present invention to provide a method of fluid treatment using a valve 1 in accordance with appended claims 1 to 12.

The method includes a step of supplying a fluid, optionally water, through inlet 4 and arranging shutter 40 in the first operating position so as to allow the fluid supplied through inlet 4 to enter compartment 21 of container 20 by passing through first access 8 and consequently, passing through second access 10 to exit via outlet 6.

The method further comprises a step of retaining by means of said magnetic device 14 solid particles, optionally ferrous or ferromagnetic, present in the fluid crossing the compartment 21 of the container 20. In fact, the fluid (optionally water) arriving from the first access 8, enters the compartment and contacts the magnetic device 14 which, thanks to the presence of the magnet 16 attracts the ferrous particles which remain trapped against the casing 15. The fluid coming out of the compartment 21 of the container is therefore a fluid (optionally water) cleaned from solid particles.

In detail, during the treatment method the fluid proceeds in sequence through the following elements: inlet 4, first through-opening 41 of the shutter 40, second through-opening of the shutter 40, first access 8, compartment 21 of the container 20, second access 10, outlet 6. When passing through the compartment 21, if the valve is provided with the septum 50, the fluid is introduced into the compartment through the first access to enter the first half-chamber: the fluid travels through the entire half-chamber and enters the second half-chamber only when reaching the fluid communication section located at the bottom portion of the container. Thereafter, the fluid travels through the entire second semi-chamber to reach the second access 10 and reach the outlet channel. Thanks to the septum 50, the fluid is conveyed along the entire development of the magnetic device 14 in such a way as to maximize the separation effect of ferrous particles.

As described above, the container 20 may further house within it (in the compartment 21) a device different from the magnetic device 14, which is also capable of cleaning the fluid from any solid particles present in the fluid. For example, in the compartment 21 may be housed at least one of a filter element (or membrane), a flow diverter capable of defining a cyclonic pattern of the fluid, a solid particle separator of a different nature.

In the event that the valve 1 further comprises the bypass opening 90, during the introduction of fluid through the inlet 4, at least a part of said fluid passes directly through the bypass opening 90 and subsequently through the third through opening 43 of the shutter 40 (placed in the first operating position) to arrive directly in the second channel 5 without passing through the compartment 21 of the container 20.

### Valve flushing method 1

It is also an aspect of the present invention to provide a method of flushing the valve 1 in accordance with the appended claims 1 to 12.

Said method comprises a step of introducing a fluid, optionally water, through outlet 6 such that said fluid can enter compartment 21 of container 20 via second access 10, said method further comprising a step of arranging shutter 40 in the second operating position such that fluid present in compartment 21 of container 20 can pass through first access 8 and exit valve 1 via drain 30.

The method further comprises a step of extracting the magnet 16 from the housing 15 so that any ferrous or ferromagnetic particles retained by the magnetic device 14 can be released within the compartment 21 of the container 20. Following or during the extraction of the magnet 16, it is then possible to arrange the shutter in the second operating position and to introduce fluid into the compartment 21 via the outlet 6; in this way, the circulating fluid can remove and drain through the outlet any ferrous or ferromagnetic particles deposited within the compartment 21.

In the case where the valve further comprises the bypass opening 90, during the introduction of fluid through the outlet 6, at least a part of said fluid passes directly through the bypass opening 90 and subsequently through the first and second through-openings 41, 42 of the shutter 40 (placed in the second operating position), without passing through the container compartment; in this way, during the introduction of fluid through the outlet 6, at least a part of said fluid reaches the drain 30 passing directly through the bypass opening 90.

### Plumbing system

It is also an aspect of the present invention to provide a plumbing system 100 comprising a valve 1 in accordance with the appended claims 1 to 12.

As, for example, shown in Figure 7, the system 100 includes at least one feed line 101 connected with the inlet 4 of the valve 1; the feed line 101 may comprise a hollow tubular conduit configured to supply a fluid (e.g., water) from the water supply system and convey it within the valve body 2 of the valve 1. It is also worth noting that, as mentioned above, the feed line 101 is fluid-tightly engaged to the engagement portion 3c of the inlet collar 3a of the first channel 3. The feed line 101 may therefore have an engagement portion on which a threaded coupling is defined, configured to engage with the engagement portion 3c of the inlet channel 3a. However, it is not excluded that the engagement between the feed line and the engagement portion 3c of the input channel, may be made by means of a quick coupling or a bayonet engagement or other.

The system 100 further comprises a supply line 102 configured to place the outlet 6 of the valve 1 in fluid communication with the boiler 103. In particular, the supply line 102 may include a respective hollow tubular conduit engaged to the engagement portion 5c of the outlet collar 5a of the second channel 5. Thus, the supply line 102 may have an engagement portion on which a threaded coupling is defined, configured to engage with the engagement portion 5c of the output channel 5a. However, it is not excluded that the engagement between the supply line 102 and the engagement portion 5c of the output channel 5, may be made by a quick coupling or a bayonet engagement or other.

The system 100 may further comprise a drain line 104 in fluid communication with the drain 30 of the valve 1 and configured to expel ferrous particles present within the valve 1 and discharge them to, for example, a collection system.

It is also worth noting that the feed line 101, the supply line 102 and the drain line 104 may be made at least partially of metallic material, for example, they may be made using at least one selected from the group of the following metallic materials: steel, brass, bronze, copper and its alloys, or aluminum and its alloys. The feed line 101, the supply line 102, and the drain line 104 may alternatively be made at least partially (i.e., entirely) of plastic material; for example, it may be made using at least one selected from the group of the following materials: ABS, PPS, PSU, PE, PTFE, PVC, or PET. Alternatively, the feed line 101, the supply line 102, and the drain line 104 may be made using metallic material and plastic material selected from the lists above.

As mentioned above, the system 100 also comprises an operational fluid treatment device 103 is a boiler configured to heat the incoming fluid from the supply line 101. In particular

In embodiments not comprised in the present invention, a fluid treatment device 103 may, for example, comprise a heat pump, configured to operate between at least a storage condition and a discharge condition. According to the present invention, in the accumulation condition, the boiler 103 is configured to receive fluid across the valve 1, from the supply line 102. During this operating condition, the shutter 40 of the valve 1 is in the first operating position, allowing the fluid entering the valve 1 and coming from the feed line 101, to pass through the compartment 21 and arrive, exiting the outlet, at the operating device 103. As mentioned above, the valve 1 comprises the magnetic device which is configured to treat the fluid - in particular to retain ferrous particles present in the fluid itself - so as to supply the supply line with treated fluid (optionally water). The fluid entering the boiler 103 via the feed line 102 is thus free of ferrous particles, which are arranged in storage in the container 20. In the storage condition, the boiler 103 is thus configured to store fluid free of ferrous particles and subsequently heat it Conversely, in the drain condition, the boiler 103 is configured to feed the fluid, accumulated during the accumulation condition, into the valve 1. During this drain condition, the shutter 40 is in the second operating position, preventing fluid from entering the valve 1 through the feed line 101. The fluid ejected from the operating device 103 then flows into the valve 1 via the supply line 102: the fluid enters the valve 1 via the outlet 6 and reaches the compartment 21 of the container through the second access 10. The fluid circulating in the valve is configured to collect any solid (ferrous) particles deposited in the compartment 21 and drain them externally to the valve 1 via the drain 30. The ferrous particles thus expelled through the drainage connection 70 are then conveyed to sewage or wastewater collection facilities.

### ADVANTAGES

The design of the valve body and of the container makes the valve 1, as a whole, extremely compact and easy to be mounted on a plumbing system. As in fact described above, inlet 4, outlet 6, drain 30 and container 20 are positioned according to a star configuration allowing easy connection of piping, for example of feed pipes and supply pipes, in close areas of the valve.

It is also important to note how, the magnetic device 14 allows to efficiently treat the fluid crossing the compartment 21; the presence of the first and second accesses 8, 10 facing the container 20 allows to minimize the pressure drops and at the same time guarantees a complete treatment of the fluid: in one aspect the fluid entering the container 20 is guided all around the casing so that said fluid can invest the entire magnetic field generated by the magnet 16.

It should also be noted that the structure of the valve body 2 and the position of the drain 30 allow the valve to perform a method of flushing the same without the need for the same to be disassembled from the system 100. In fact, thanks to the first and second channels 3, 5 and to the presence of the discharge channel 30 directly communicating with the shutter 40, it is possible to define two operating conditions of the valve in which, in one condition, the valve itself is able to correctly guide the fluid in the compartment 21 of the container (normal operating condition) and, in a different condition (drain condition), the valve allows to receive fluid from an operating device (i.e. boiler) in order to allow the correct washing (cleaning) of the valve 1.

## Claims

1. Valve (1) for hydraulic plants (100) comprising:
- a valve body (2) having at least one inlet (4), at least one outlet (6), at least one first and one second access (8, 10) and at least one drain (30), each of which is configured for allowing the passage of fluid, optionally the passage of water, said valve body (2) comprising:
∘ at least one first channel (3) extended between the inlet (4) and the first access (8), said first channel (3) having at its interior at least one seat (3b) interposed between the inlet (4) and the first access (8), wherein the drain (30) is in fluid communication with said first channel (3) and arranged at least partly facing said seat (3b),
∘ at least one second channel (5), separate from first channel (3), extended between the outlet (6) and the second access (10),
- at least one container (20), defining a compartment (21), engaged with the valve body (2) at said first and second accesses (8, 10),
- at least one shutter (40) housed in the seat (3b) and configured for intercepting the fluid passing from said first channel (3), wherein the shutter (40) is movable at least between:
∘ a first operating position, in which the shutter (40) allows the fluid communication between the inlet (4) and the first access (8) so as to allow the introduction of a fluid arriving from the inlet (4) into the compartment (21) of the container (20) through said first access (8), wherein the shutter (40), in the first operating position, prevents passage of fluid through the drain (30),
∘ a second operating position, in which the shutter (40) allows the fluid communication between the first access (8) and the drain (30), wherein the shutter (40), in the second operating position, prevents fluid communication between the inlet (4) and the first access (8), and
- at least one magnetic device (14) at least partly arranged in the compartment (21) of the container (20) and configured for attracting thereto ferrous or ferromagnetic particles present in the fluid passing from the compartment.

2. Valve according to claim 1, wherein the valve body (2) comprises:
- a first half-part on which the first access (8), the second access (10), the outlet (6) and the drain (30) are defined, and
- a second half-part on which the inlet (4) is defined, optionally on which only the inlet (4) is defined,
wherein the first and the second half-part are removably engaged with each other, optionally by means of a threaded coupling.

3. Valve according to the preceding claim, wherein on the first half-part, the entire second channel (5) and at least one portion of the first channel (3) are defined, wherein said portion of the first channel (3) defined on the first half-part carries the first access (8) and communicates with the seat (3b) and the drain (30);
wherein:
- the second channel (5) is in one piece with at least part of the first channel (3),
- the drain (30) is in one piece with the second channel (5) and with at least part of the first channel (3).

4. Valve according to any one of the preceding claims, wherein the container (20) has at least one respective access (22) placed in fluid communication directly with the first and the second access (8, 10) of the valve body (2) and configured for allowing the passage of fluid entering and/or exiting from the compartment (21),
wherein the first and the second accesses (8, 10) are both facing the at least one access (22) of the container (20).

5. Valve according to any one of the preceding claims, wherein the shutter (40) comprises a first through opening (41), a second through opening (42) and a third through opening (43),
wherein said first, second and third through openings (41, 42, 43) are in fluid communication with each other by means of a central cavity (47) of the shutter (40),
wherein the first and the second through openings (41, 42) face each other while the third through opening (43) is angularly offset with respect to said first and second through openings (41, 42) and faces a closure wall (48) of the shutter (40);
further wherein
- in the first operating position of the shutter (40), the first through opening (41) faces the inlet (4) while the second through opening (42) directly faces the first access (8), wherein, in the first operating position of the shutter (40), the closure wall (48) is configured for preventing fluid communication between the drain (30) and the first channel (3) of the valve body (2),
- in the second operating position of the shutter (40), the third through opening (43) directly faces the first access (8) while the second through opening (42) directly faces the drain (30), wherein, in the second operating position of the shutter (40), the closure wall (48) is configured for preventing fluid communication between the inlet (4) and the drain (30) and preventing the fluid communication between said inlet (4) and the compartment (21) of the container (20).

6. Valve according to claim 5, wherein the first and the second through openings (41, 42) are aligned along a first direction while the third through opening (43) and the closure wall are aligned along a second direction, wherein the first and the second directions are substantially orthogonal to each other,
wherein the first and the second directions define an ideal plane, wherein the shutter (40) is movable between the first and the second operating position, and vice versa, around an axis orthogonal to said ideal plane.

7. Valve according to the preceding claim, wherein the shutter (40) is movable between the first and the second operating position, and vice versa, around said axis orthogonal to said ideal plane, by an angle comprised between 70 and 110°, optionally by an angle substantially equal to 90°.

8. Valve according to any one of the preceding claims, wherein the valve body (2) comprises a central body from which at least one hollow inlet collar (3a) and at least one hollow outlet collar (5a) emerge,
wherein the inlet collar (3a) is configured for defining the inlet (4) of the valve body (2) and at least one terminal portion of the first channel (3),
wherein the outlet collar (5a) is configured for defining the outlet (6) of the valve body (2) and at least one terminal portion of the second channel (5),
wherein the inlet collar (3a) is removably engaged with the central body, optionally by means of a threaded coupling, the outlet collar (5a) being integrally joined to the central body.

9. Valve according to the preceding claim, wherein the valve body (2) comprises a hollow drainage collar (30a) integrally joined to the central body and configured for defining the drain (30), the drainage collar (30a) being opposite the outlet collar (5a),
wherein the valve body (2) comprises at least one hollow intermediate collar (80) integrally joined to the central body, wherein said intermediate collar (80) emerges from the central body on the side opposite the inlet collar (3a) with respect to the central body, wherein the first and the second accesses (8, 10) are defined within the intermediate collar (80).

10. Valve according to any one of the preceding claims, wherein the container (20) extends along a longitudinal axis (X) between a head portion and a bottom portion (20a, 20b),
wherein said container (20) is engaged with the valve body at the head portion (20a),
wherein the access (22) of the container (20) is defined at the head portion (20a);
wherein the valve comprises at least one septum (50) at least partially arranged in the compartment (21) of the container (20) and configured for dividing said compartment (21) into a first and a second half-chambers in fluid communication with each other,
wherein the septum (50) is brought directly by the container (20),
optionally wherein the septum (50) comprises a laminar body substantially extended along a plane parallel to, or containing, the longitudinal axis (X) of the container (20).

11. Valve according to any one of the preceding claims, wherein the magnetic device (14) is extended for most of the container (20) along the longitudinal axis (X).

12. Valve according to any one of the preceding claims, wherein the magnetic device (14) comprises:
- a casing (15), optionally integrally joined to the container (20), having elongated form and extended between a first end portion (15a), at which the casing (15) is engaged with the container (20), and a second end portion (15b),
- at least one magnet (16) housed in the casing (15),
wherein the casing (15) is extended starting from the bottom portion (2b) of the container (20) in the direction of the head portion (2a), optionally along a respective main extension axis parallel to the longitudinal axis (X) of the container (20),
wherein the casing (15) comprises a hollow body defining a compartment within which the magnet (16) is housed, the hollow body of the casing (15) having an insertion opening (15d) placed at the first end portion (15a) of the casing (15) and through which the magnet (16) can be removed from or inserted in the casing (15).

13. Method of treating fluids by means of a valve (1) according to any one of the preceding claims, wherein said fluid treatment method comprises the steps of:
- introducing a fluid, optionally water, through the inlet (4),
- arranging the shutter (40) in the first operating position so as to allow the fluid introduced through the inlet (4) to circulate in the compartment (21) of the container (20) passing through the first access (8), and through the second access (10), entering into the second channel (5) in order to allow the expulsion of said fluid from the valve body (2) through the outlet (6);
wherein said method also comprises a step of retaining, by means of the magnetic device (14), solid particles, optionally ferrous or ferromagnetic, present in the fluid traversing the compartment (21) of the container (20).

14. Method of washing a valve according to claim 12, said method comprising at least the following steps:
- introducing a fluid through the outlet (6) in a manner such that such fluid can enter into the compartment (21) of the container (20) by means of the second access (10),
- arranging the shutter (40) in the second operating position so as to allow the fluid present in the compartment (21) of the container (20) to traverse the first access (8) and exit from the valve through the drain (30);
wherein said method comprises a step of extracting the magnet (16) from the casing (15), and said step of extracting the magnet (16) allows releasing the ferrous or ferromagnetic particles retained by the magnetic device (14) within the compartment (21),
wherein the method comprises a step of circulating the fluid through the compartment (21) of the container (20) - at least during the arrangement of the shutter (40) in the second operating position and when the magnet (16) is placed outside of the casing - in a manner such that the fluid can remove and drain through the drain the ferrous or ferromagnetic particles deposited within the compartment (21).

15. A plumbing system (100) comprising:
- a valve according to any one of claims from 1 to 12,
- at least one feed line (101) connected to the inlet (4) of the valve (1), said feed line (101) being configured to allow fluid to enter the first channel (3) via the inlet (4),
- a boiler (103) for heating fluid,
- a supply line (102) which puts the outlet (6) of the valve (1) into fluid communication with the boiler (103);
wherein the boiler can be placed in an accumulation condition during which it is configured to receive fluid arriving from the valve (1), wherein the valve shutter (40), in the accumulation condition, is in the first operating position, and in a drain condition during which said boiler is configured to send fluid to the valve (1), wherein the valve shutter (40), in the boiler drain condition, is positioned in the second operating position.

## Patentansprüche

1. Ventil (1) für Hydraulikanlagen (100), umfassend:
- einen Ventilkörper (2) mit wenigstens einem Einlass (4), wenigstens einem Auslass (6), wenigstens einem ersten und einem zweiten Zugang (8, 10) und wenigstens einem Abfluss (30), von welchen jeder für ein Erlauben des Durchgangs von Fluid eingerichtet ist, optional des Durchgangs von Wasser, wobei der Ventilkörper (2) umfasst:
∘ wenigstens einen ersten Kanal (3), welcher sich zwischen dem Einlass (4) und dem ersten Zugang (8) erstreckt, wobei der erste Kanal (3) an seiner Innenseite wenigstens einen Sitz (3b) aufweist, welcher zwischen dem Einlass (4) und dem ersten Zugang (8) eingefügt ist, wobei der Abfluss (30) in Fluidkommunikation mit dem ersten Kanal (3) steht und wenigstens teilweise zu dem Sitz (3b) weisend angeordnet ist,
∘ wenigstens einen zweiten Kanal (5), welcher separat von dem ersten Kanal (3) ist, welcher sich zwischen dem Auslass (6) und dem zweiten Zugang (10) erstreckt,
- wenigstens einen Behälter (20), welcher ein Abteil (21) definiert, welcher mit dem Ventilkörper (2) und den ersten und zweiten Zugängen (8, 10) eingreift,
- wenigstens ein Schließelement (40), welche in dem Sitz (3b) aufgenommen und dazu eingerichtet ist, den Fluiddurchgang von dem ersten Kanal (3) abzufangen, wobei das Schließelement (40) bewegbar ist zwischen wenigstens:
∘ einer ersten Betriebsposition, in welcher das Schließelement (40) die Fluidkommunikation zwischen dem Einlass (4) und dem ersten Zugang (8) erlaubt, um so die Eingabe eines Fluids, welches von dem Einlass (4) einläuft, in das Abteil (21) des Behälters (20) durch den ersten Zugang (8) zu erlauben, wobei das Schließelement (40) in der ersten Betriebsposition einen Durchgang von Fluid durch den Abfluss (30) verhindert,
∘ einer zweiten Betriebsposition, in welcher das Schließelement (40) die Fluidkommunikation zwischen dem ersten Zugang (8) und dem Abfluss (30) erlaubt, wobei das Schließelement (40) in der zweiten Betriebsposition eine Fluidkommunikation zwischen dem Einlass (4) und dem ersten Zugang (8) verhindert, und
- wenigstens eine magnetische Vorrichtung (14), welche wenigstens teilweise in dem Abteil (21) des Behälters (20) angeordnet und dazu eingerichtet ist, Eisenpartikel oder ferromagnetische Partikel dahin anzuziehen, welche in dem Fluid vorliegen, welches von dem Abteil hindurchtritt.

2. Ventil nach Anspruch 1, wobei der Ventilkörper (2) umfasst:
- ein erstes Halbteil, an welchem der erste Zugang (8), der zweite Zugang (10), der Auslass (6) und der Abfluss (30) definiert sind, und
- ein zweites Halbteil, an welchem der Einlass (4) definiert ist, an welchem optional lediglich der Einlass (4) definiert ist,
wobei das erste und das zweite Halbteil lösbar miteinander eingreifen, optional mittels einer Gewindekopplung

3. Ventil nach dem vorhergehenden Anspruch, wobei an dem ersten Halbteil der gesamte zweite Kanal (5) und wenigstens ein Abschnitt des ersten Kanals (3) definiert sind, wobei der Abschnitt des ersten Kanals (3), welcher an dem ersten Halbteil definiert ist, den ersten Zugang (8) trägt und mit dem Sitz (3b) und dem Abfluss (30) kommuniziert;
wobei:
- der zweite Kanal (5) einstückig mit wenigstens einem Teil des ersten Kanals (3) ist,
- der Abfluss (30) einstückig mit dem zweiten Kanal (5) und wenigstens einem Teil des ersten Kanals (3) ist.

4. Ventil nach einem der vorhergehenden Ansprüche, wobei der Behälter (20) wenigstens einen entsprechenden Zugang (22) aufweist, welcher in Fluidkommunikation direkt mit den ersten und den zweiten Zugängen (8, 10) des Ventilkörpers (2) steht und dazu eingerichtet ist, den Durchgang von Fluid zu erlauben, welches in das Abteil (21) eintritt und/oder daraus austritt,
wobei die ersten und die zweiten Zugänge (8, 10) beide zu dem wenigstens einen Zugang (22) des Behälters (20) weisen.

5. Ventil nach einem der vorhergehenden Ansprüche, wobei das Schließelement (40) eine erste Durchgangsöffnung (41), eine zweite Durchgangsöffnung (42) und eine dritte Durchgangsöffnung (43) umfasst,
wobei die ersten, zweiten und dritten Durchgangsöffnungen (41, 42, 43) in Fluidkommunikation miteinander mittels eines zentralen Hohlraums (47) des Schließelements (40) stehen,
wobei die ersten und die zweiten Durchgangsöffnungen (41, 42) zueinander weisen, während die dritte Durchgangsöffnung (43) bezüglich der ersten und zweiten Durchgangsöffnungen (41, 42) winkelversetzt ist und zu einer Schließwand (48) des Schließelements (40) weist;
wobei ferner:
- in der ersten Betriebsposition des Schließelements (40) die erste Durchgangsöffnung (41) zu dem Einlass (4) weist, während die zweite Durchgangsöffnung (42) direkt zu dem ersten Zugang (8) weist, wobei in der ersten Betriebsposition des Schließelements (40) die Schließwand (48) dazu eingerichtet ist, eine Fluidkommunikation zwischen dem Abfluss (30) und dem ersten Kanal (3) des Ventilkörpers (2) zu verhindern,
- in der zweiten Betriebsposition des Schließelements (40) die dritte Durchgangsöffnung (43) direkt zu dem ersten Zugang (8) weist, während die zweite Durchgangsöffnung (42) direkt zu dem Abfluss (30) weist, wobei in der zweiten Betriebsposition des Schließelements (40) die Schließwand (48) dazu eingerichtet ist, eine Fluidkommunikation zwischen dem Einlass (4) und dem Abfluss (30) zu verhindern und die Fluidkommunikation zwischen dem Einlass (4) und dem Abteil (21) des Behälters (20) zu verhindern.

6. Ventil nach Anspruch 5, wobei die ersten und die zweiten Durchgangsöffnungen (41, 42) entlang einer ersten Richtung ausgerichtet sind, während die dritte Durchgangsöffnung (43) und die Schließwand entlang einer zweiten Richtung ausgerichtet sind, wobei die ersten und die zweiten Richtungen im Wesentlichen orthogonal zueinander sind,
wobei die ersten und die zweiten Richtungen eine ideale Ebene definieren, wobei das Schließelement (40) zwischen der ersten und der zweiten Betriebsposition und umgekehrt um eine Achse orthogonal zu der idealen Ebene bewegbar ist.

7. Ventil nach dem vorhergehenden Anspruch, wobei das Schließelement (40) zwischen der ersten und der zweiten Betriebsposition und umgekehrt um die Achse orthogonal zu der idealen Ebene um einen Winkel bewegbar ist, welcher zwischen 70 und 110° beträgt, optional um einen Winkel, welcher im Wesentlichen gleich 90° ist.

8. Ventil nach einem der vorhergehenden Ansprüche, wobei der Ventilkörper (2) einen zentralen Körper umfasst, von welchem wenigstens ein hohler Einlasskragen (3a) und wenigstens ein hohler Auslasskragen (5a) vorstehen,
wobei der Einlasskragen (3a) für ein Definieren des Einlasses (4) des Ventilkörpers (2) und wenigstens eines Endabschnitts des ersten Kanals (3) eingerichtet ist, wobei der Auslasskragen (5a) für ein Definieren des Auslasses (6) des Ventilkörpers (2) und wenigstens eines Endabschnitts des zweiten Kanals (5) eingerichtet ist,
wobei der Einlasskragen (3a) lösbar mit dem zentralen Körper eingreift, optional mittels einer Gewindekopplung, wobei der Auslasskragen (5a) integral mit dem zentralen Körper verbunden ist.

9. Ventil nach dem vorhergehenden Anspruch, wobei der Ventilkörper (2) einen hohlen Abflusskragen (30a) umfasst, welcher integral mit dem zentralen Körper verbunden und für ein Definieren des Abflusses (30) eingerichtet ist, wobei der Abflusskragen (30a) dem Auslasskragen (5a) gegenüberliegt,
wobei der Ventilkörper (2) wenigstens einen hohlen Zwischenkragen (80) umfasst, welcher integral mit dem zentralen Körper verbunden ist, wobei der Zwischenkragen (80) von dem zentralen Körper an der Seite gegenüber dem Einlasskragen (3a) bezüglich des zentralen Körpers vorsteht, wobei die ersten und die zweiten Zugänge (8, 10) innerhalb des Zwischenkragens (80) definiert sind.

10. Ventil nach einem der vorhergehenden Ansprüche, wobei sich der Behälter (20) entlang einer longitudinalen Achse (x) zwischen einem Kopfabschnitt und einem Bodenabschnitt (20a, 20b) erstreckt,
wobei der Behälter (20) mit dem Ventilkörper an dem Kopfabschnitt (20a) eingreift, wobei der Zugang (22) des Behälters (20) an dem Kopfabschnitt (20a) definiert ist; wobei das Ventil wenigstens ein Septum (50) umfasst, welches wenigstens teilweise in dem Abteil (21) des Behälters (20) angeordnet und für ein Unterteilen des Abteils (21) in eine erste und eine zweite Halbkammer in Fluidkommunikation miteinander eingerichtet ist,
wobei das Septum (50) direkt durch den Behälter (20) beigebracht wird,
wobei optional das Septum (50) einen laminaren Körper umfasst, welcher sich im Wesentlichen entlang einer Ebene parallel zu der longitudinalen Achse (X) des Behälters (20) oder diese enthaltend erstreckt.

11. Ventil nach einem der vorhergehenden Ansprüche, wobei sich die magnetische Vorrichtung (14) für den Großteil des Behälters (20) entlang der longitudinalen Achse (X) erstreckt.

12. Ventil nach einem der vorhergehenden Ansprüche, wobei die magnetische Vorrichtung (14) umfasst:
- ein Gehäuse (15), welches optional mit dem Behälter (20) verbunden ist, welches eine längliche Form aufweist und sich zwischen einem ersten Endabschnitt (15a), an welchem das Gehäuse (15) mit dem Behälter (20) eingreift, und einem zweiten Endabschnitt (15b) erstreckt,
- wenigstens einen Magneten (16), welcher in dem Gehäuse (15) aufgenommen ist,
wobei sich das Gehäuse (15) beginnend von dem unteren Abschnitt (2b) des Behälters (20) in der Richtung des Kopfabschnitts (2a) erstreckt, optional entlang einer entsprechenden Haupt-Erstreckungsachse parallel zu der longitudinalen Achse (X) des Behälters (20),
wobei das Gehäuse (15) einen hohlen Körper umfasst, welcher ein Abteil definiert, innerhalb welchem der Magnet (16) aufgenommen ist, wobei der hohle Körper des Gehäuses (15) eine Einsetzöffnung (15d) aufweist, welche an dem ersten Endabschnitt (15a) des Gehäuses (15) platziert ist, und durch welche der Magnet (16) aus dem Gehäuse (15) entfernt oder darin eingesetzt werden kann.

13. Verfahren zum Behandeln von Fluiden mittels eines Ventils (1) nach einem der vorhergehenden Ansprüche, wobei das Fluid-Behandlungsverfahren die Schritte umfasst:
- Eingeben eines Fluids, optional von Wasser, durch den Einlass (4),
- Anordnung des Schließelements (40) in der ersten Betriebsposition, um es so dem durch den Einlass (4) eingegebenen Fluid zu erlauben, in dem Abteil (21) des Behälters (20) zu zirkulieren, durch den ersten Zugang (8) und den zweiten Zugang (10) hindurchzutreten, in den zweiten Kanal (5) einzutreten, um das Ausstoßen des Fluids von dem Ventilkörper (2) durch den Auslass (6) zu erlauben;
wobei das Verfahren ebenfalls einen Schritt eines Zurückhaltens, mittels der magnetischen Vorrichtung (14), von Feststoffpartikeln, optional aus Eisen oder ferromagnetisch, umfasst, welche in dem Fluid vorliegen, welches das Abteil (21) des Behälters (20) durchquert.

14. Verfahren eines Waschens eines Ventils nach Anspruch 12, wobei das Verfahren wenigstens die folgenden Schritte umfasst:
- Eingeben eines Fluids durch den Auslass (6) in einer derartigen Weise, dass derartiges Fluid in das Abteil (21) des Behälters (20) eintreten kann, mittels des zweiten Zugangs (10),
- Anordnen des Schließelements (40) in der zweiten Betriebsposition, um es so dem in dem Abteil (21) des Behälters (20) vorliegenden Fluid zu erlauben, den ersten Zugang (8) zu durchqueren und aus dem Ventil durch den Abfluss (30) auszutreten;
wobei das Verfahren einen Schritt eines Entnehmens des Magneten (16) aus dem Gehäuse (15) umfasst und der Schritt des Entnehmens des Magneten (16) ein Freigeben der Eisenpartikel oder ferromagnetischen Partikel erlaubt, welche von der magnetischen Vorrichtung (14) innerhalb des Abteils (21) zurückgehalten werden,
wobei das Verfahren einen Schritt eines Zirkulierens des Fluids durch das Abteil (21) des Behälters (20) - wenigstens während der Anordnung des Schließelements (40) in der zweiten Betriebsposition und wenn der Magnet (16) außerhalb des Gehäuses platziert ist - in einer derartigen Weise umfasst, dass das Fluid die innerhalb des Abteils (21) abgelagerten Eisenpartikel oder ferromagnetischen Partikel durch den Abfluss entfernen und ausspülen kann.

15. Sanitärsystem (100), umfassend:
- ein Ventil nach einem der Ansprüche 1 bis 12,
- wenigstens eine Versorgungsleitung (101), welche mit dem Einlass (4) des Ventils (1) verbunden ist, wobei die Versorgungsleitung (101) dazu eingerichtet ist, es Fluid zu erlauben, in den ersten Kanal (3) mittels des Einlasses (4) einzutreten,
- einen Boiler (103) zum Erhitzen von Fluid,
- eine Lieferleitung (102), welche den Auslass (6) des Ventils (1) in Fluidkommunikation mit dem Boiler (103) versetzt;
wobei der Boiler in einen Sammelzustand platziert werden kann, während welchem er dazu eingerichtet ist, Fluid anzunehmen, welches von dem Ventil (1) eintritt, wobei das Ventil-Schließelement (40) in dem Sammelzustand in der ersten Betriebsposition ist, sowie in einem Abflusszustand, während welchem der Boiler dazu eingerichtet ist, Fluid zu dem Ventil (1) zu schicken, wobei das Ventil-Schließelement (40) in dem Boiler-Abflusszustand in der zweiten Betriebsposition positioniert ist.

## Revendications

1. Vanne (1) pour installations hydrauliques (100) comprenant :
- un corps de vanne (2) ayant au moins un orifice d'entrée (4), au moins un orifice de sortie (6), au moins un premier et un second accès (8, 10) et au moins un drain (30), dont chacun est conçu pour permettre le passage de fluide, éventuellement le passage d'eau, ledit corps de vanne (2) comprenant :
∘ au moins un premier canal (3) étendu entre l'orifice d'entrée (4) et le premier accès (8), ledit premier canal (3) ayant au niveau de son intérieur au moins un siège (3b) interposé entre l'orifice d'entrée (4) et le premier accès (8), le drain (30) se trouvant en communication fluidique avec ledit premier canal (3) et disposé au moins partiellement face audit siège (3b),
∘ au moins un second canal (5), séparé du premier canal (3), étendu entre l'orifice de sortie (6) et le second accès (10),
- au moins un récipient (20), définissant un compartiment (21), engagé avec le corps de vanne (2) au niveau desdits premier et second accès (8, 10),
- au moins un obturateur (40) logé dans le siège (3b) et conçu pour intercepter le fluide passant depuis ledit premier canal (3), l'obturateur (40) étant mobile au moins entre :
∘ une première position de fonctionnement, dans laquelle l'obturateur (40) permet la communication fluidique entre l'orifice d'entrée (4) et le premier accès (8) afin de permettre l'introduction d'un fluide arrivant depuis l'orifice d'entrée (4) dans le compartiment (21) du récipient (20) à travers ledit premier accès (8), l'obturateur (40), dans la première position de fonctionnement, empêchant un passage de fluide à travers le drain (30),
∘ une seconde position de fonctionnement, dans laquelle l'obturateur (40) permet la communication fluidique entre le premier accès (8) et le drain (30), l'obturateur (40), dans la seconde position de fonctionnement, empêchant une communication fluidique entre l'orifice d'entrée (4) et le premier accès (8), et
- au moins un dispositif magnétique (14) au moins partiellement agencé dans le compartiment (21) du récipient (20) et conçu pour y attirer des particules ferreuses ou ferromagnétiques présentes dans le fluide passant depuis le compartiment.

2. Vanne selon la revendication 1, le corps de vanne (2) comprenant :
- une première moitié sur laquelle le premier accès (8), le second accès (10), l'orifice de sortie (6) et le drain (30) sont définis, et
- une seconde moitié sur laquelle l'orifice d'entrée (4) est défini, éventuellement sur laquelle uniquement l'orifice d'entrée (4) est défini,
la première et la seconde moitié étant engagées de manière amovible l'une avec l'autre, éventuellement à l'aide d'un accouplement fileté.

3. Vanne selon la revendication précédente, sur la première moitié, le second canal (5) entier et au moins une portion du premier canal (3) étant définis, ladite portion du premier canal (3) défini sur la première moitié portant le premier accès (8) et communiquant avec le siège (3b) et le drain (30) ;
- le second canal (5) étant d'une seule pièce avec au moins une partie du premier canal (3),
- le drain (30) étant d'une seule pièce avec le second canal (5) et avec au moins une partie du premier canal (3).

4. Vanne selon l'une quelconque des revendications précédentes, le récipient (20) ayant au moins un accès (22) respectif placé en communication fluidique directement avec le premier et le second accès (8, 10) du corps de vanne (2) et conçu pour permettre le passage de fluide entrant et/ou sortant du compartiment (21),
le premier et le second accès (8, 10) faisant tous les deux face à le au moins un accès (22) du récipient (20).

5. Vanne selon l'une quelconque des revendications précédentes, l'obturateur (40) comprenant une première ouverture traversante (41), une seconde ouverture traversante (42) et une troisième ouverture traversante (43),
lesdites première, seconde et troisième ouvertures traversantes (41, 42, 43) se trouvant en communication fluidique l'une avec l'autre à l'aide d'une cavité centrale (47) de l'obturateur (40),
la première et la seconde ouverture traversante (41, 42) se faisant face l'une l'autre tandis que la troisième ouverture traversante (43) est décalée de manière angulaire par rapport auxdites première et seconde ouverture traversante (41, 42) et faisant face à une paroi de fermeture (48) de l'obturateur (40) ;
en outre
- dans la première position de fonctionnement de l'obturateur (40), la première ouverture traversante (41) fait face à l'orifice d'entrée (4) tandis que la seconde ouverture traversante (42) fait face directement au premier accès (8), dans la première position de fonctionnement de l'obturateur (40), la paroi de fermeture (48) étant conçue pour empêcher une communication fluidique entre le drain (30) et le premier canal (3) du corps de vanne (2),
- dans la seconde position de fonctionnement de l'obturateur (40), la troisième ouverture traversante (43) fait face directement au premier accès (8) tandis que la seconde ouverture traversante (42) fait face directement au drain (30), dans la seconde position de fonctionnement de l'obturateur (40), la paroi de fermeture (48) étant conçue pour empêcher une communication fluidique entre l'orifice d'entrée (4) et le drain (30) et empêcher la communication fluidique entre ledit orifice d'entrée (4) et le compartiment (21) du récipient (20).

6. Vanne selon la revendication 5, la première et la seconde ouverture traversante (41, 42) étant alignées le long d'un premier sens tandis que la troisième ouverture traversante (43) et la paroi de fermeture sont alignées le long d'un second sens, le premier et le second sens étant sensiblement orthogonaux l'un par rapport à l'autre,
le premier et le second sens définissant un plan idéal, l'obturateur (40) étant mobile entre la première et la seconde position de fonctionnement, et *vice versa,* autour d'un axe orthogonal audit plan idéal.

7. Vanne selon la revendication précédente, l'obturateur (40) étant mobile entre la première et la seconde position de fonctionnement, et *vice versa,* autour dudit axe orthogonal audit plan idéal, d'un angle compris entre 70 et 110°, éventuellement d'un angle sensiblement égal à 90°.

8. Vanne selon l'une quelconque des revendications précédentes, le corps de vanne (2) comprenant un corps central depuis lequel au moins un collier d'orifice d'entrée (3a) creux et au moins un collier d'orifice de sortie (5a) creux émergent,
le collier d'orifice d'entrée (3a) étant conçu pour définir l'orifice d'entrée (4) du corps de vanne (2) et au moins une partie terminale du premier canal (3),
le collier d'orifice de sortie (5a) étant conçu pour définir l'orifice de sortie (6) du corps de vanne (2) et au moins une partie terminale du second canal (5),
le collier d'orifice d'entrée (3a) étant engagé de manière amovible avec le corps central, éventuellement à l'aide d'un accouplement fileté, le collier d'orifice de sortie (5a) étant intégralement joint au corps central.

9. Vanne selon la revendication précédente, le corps de vanne (2) comprenant un collier de drainage (30a) creux intégralement joint au corps central et conçu pour définir le drain (30), le collier de drainage (30a) étant opposé au collier d'orifice de sortie (5a),
le corps de vanne (2) comprenant au moins un collier intermédiaire (80) creux intégralement joint au corps central, ledit collier intermédiaire (80) émergeant du corps central sur le côté opposé au collier d'orifice d'entrée (3a) par rapport au corps central, le premier et le second accès (8, 10) étant définis à l'intérieur du collier intermédiaire (80).

10. Vanne selon l'une quelconque des revendications précédentes, le récipient (20) s'étendant le long d'un axe longitudinal (X) entre une portion de tête et une portion inférieure (20a, 20b),
ledit récipient (20) étant engagé avec le corps de vanne au niveau de la portion de tête (20a),
l'accès (22) du récipient (20) étant défini au niveau de la portion de tête (20a) ;
la vanne comprenant au moins une cloison (50) au moins partiellement disposée dans le compartiment (21) du récipient (20) et conçue pour diviser ledit compartiment (21) en une première et une seconde demi-chambre en communication fluidique l'une avec l'autre,
la cloison (50) étant portée directement par le récipient (20),
éventuellement la cloison (50) comprenant un corps laminaire étendu sensiblement le long d'un plan parallèle à, ou contenant, l'axe longitudinal (X) du récipient (20).

11. Vanne selon l'une quelconque des revendications précédentes, le dispositif magnétique (14) étant étendu pour la plupart du récipient (20) le long de l'axe longitudinal (X).

12. Vanne selon l'une quelconque des revendications précédentes, le dispositif magnétique (14) comprenant :
- un boîtier (15), éventuellement intégralement joint au récipient (20), ayant une forme allongée et étendu entre une première portion d'extrémité (15a), à laquelle le boîtier (15) est engagé avec le récipient (20), et une seconde portion d'extrémité (15b),
- au moins un aimant (16) logé dans le boîtier (15),
le boîtier (15) étant étendu en commençant depuis la portion inférieure (2b) du récipient (20) dans le sens de la portion de tête (2a), éventuellement le long d'un axe d'extension principal respectif parallèle à l'axe longitudinal (X) du récipient (20),
le boîtier (15) comprenant un corps creux définissant un compartiment à l'intérieur duquel l'aimant (16) est logé, le corps creux du boîtier (15) ayant une ouverture d'insertion (15d) placée à la première portion d'extrémité (15a) du boîtier (15) et à travers laquelle l'aimant (16) peut être retiré du, ou inséré dans le, boîtier (15).

13. Procédé de traitement de fluides à l'aide d'une vanne (1) selon l'une quelconque des revendications précédentes, ledit procédé de traitement de fluide comprenant les étapes consistant à :
- introduire un fluide, éventuellement de l'eau, à travers l'orifice d'entrée (4),
- disposer l'obturateur (40) dans la première position de fonctionnement afin de permettre au fluide introduit à travers l'orifice d'entrée (4) de circuler dans le compartiment (21) du récipient (20) en passant à travers le premier accès (8), et à travers le second accès (10), entrant dans le second canal (5) afin de permettre l'expulsion dudit fluide du corps de vanne (2) à travers l'orifice de sortie (6) ;
ledit procédé comprenant également une étape de retenue, à l'aide du dispositif magnétique (14), des particules solides, éventuellement ferreuses ou ferromagnétiques, présentes dans le fluide traversant le compartiment (21) du récipient (20).

14. Procédé de lavage d'une vanne selon la revendication 12, ledit procédé comprenant au moins les étapes suivantes consistant à :
- introduire un fluide à travers l'orifice de sortie (6) d'une manière telle que du fluide peut pénétrer dans le compartiment (21) du récipient (20) à l'aide du second accès (10),
- disposer l'obturateur (40) dans la seconde position de fonctionnement afin de permettre au fluide présent dans le compartiment (21) du récipient (20) de traverser le premier accès (8) et de sortir de la vanne à travers le drain (30) ;
ledit procédé comprenant une étape consistant à extraire l'aimant (16) du boîtier (15), et ladite étape d'extraction de l'aimant (16) permettant la libération des particules ferreuses ou ferromagnétiques retenues par le dispositif magnétique (14) à l'intérieur du compartiment (21),
le procédé comprenant une étape consistant à faire circuler le fluide à travers le compartiment (21) du récipient (20) - au moins durant la disposition de l'obturateur (40) dans la seconde position de fonctionnement et lorsque l'aimant (16) est placé à l'extérieur du boîtier - d'une manière telle que le fluide peut éliminer et drainer à travers le drain les particules ferreuses ou ferromagnétiques déposées à l'intérieur du compartiment (21).

15. Système de plomberie (100) comprenant :
- une vanne selon l'une quelconque des revendications de 1 à 12,
- au moins une conduite d'alimentation (101) raccordée à l'orifice d'entrée (4) de la vanne (1), ladite conduite d'alimentation (101) étant conçue pour permettre à un fluide de pénétrer dans le premier canal (3) par l'intermédiaire de l'orifice d'entrée (4),
- une chaudière (103) pour chauffer un fluide,
- un approvisionnement (102) qui place l'orifice de sortie (6) de la vanne (1) en communication fluidique avec la chaudière (103) ;
la chaudière pouvant être placée sous un état d'accumulation durant lequel elle est conçue pour recevoir du fluide arrivant depuis la vanne (1), l'obturateur de vanne (40), dans l'état d'accumulation, se trouvant dans la première position de fonctionnement, et dans un état de vidange durant lequel ladite chaudière est conçue pour envoyer du fluide vers la vanne (1), l'obturateur de vanne (40), dans l'état de vidange de la chaudière, étant positionné dans la seconde position de fonctionnement.
